# EUROPÄISCHE PATENTSCHRIFT

(11) **EP 3 414 419 B1**
(45) Veröffentlichungstag und Bekanntmachung des Hinweises auf die Patenterteilung: **25.03.2020**
(21) Anmeldenummer: 17712918.6
(22) Anmeldetag: 08.02.2017
(51) Int. Cl.: E21B 7/06, E21B 17/10, F03G 7/06

(54) **BOHRWERKZEUG ZUM ABTEUFEN VON AUTOMATISCH RICHTUNGSÜBERWACHTEN BOHRUNGEN**
DRILLING TOOL FOR SINKING AUTOMATICALLY DIRECTIONALLY MONITORED BORES
OUTIL DE FORAGE PERMETTANT DE CREUSER DES FORAGES À DIRECTION AUTOMATIQUEMENT CONTRÔLÉE

(30) Priorität: 08.02.2016 DE 102016001779
(43) Veröffentlichungstag der Anmeldung: 19.12.2018
(73) Patentinhaber: Smart Drilling GmbH, 45892 Gelsenkirchen (DE)
(72) Erfinder: VORHOFF, Werner, 46483 Wesel (DE)
(74) Vertreter: Kador & Partner PartG mbB
(86) Internationale Anmeldenummer: PCT/DE2017/000036
(87) Internationale Veröffentlichungsnummer: WO 2017/137026

(56) Entgegenhaltungen:
- DE-A1-102008 063 940
- JP-A- H10 255 619
- US-A- 4 501 337
- US-A1- 2007 227 775
- US-A1- 2011 031 025
- Anonymous: "Nickel titanium - Wikipedia", , 23. Januar 2016 (2016-01-23), XP055381117, Gefunden im Internet: URL:https://en.wikipedia.org/w/index.php?t itle=Nickel_titanium&oldid=701251459 [gefunden am 2017-06-13]
- Rau G: "THERMAL ACTUATORS", , 27. Juni 2014 (2014-06-27), XP055381154, Gefunden im Internet: URL:https://www.g-rau.de/fileadmin/gustavr au/downloads/service/downloads/thermal_act uators.pdf [gefunden am 2017-06-13]

## Beschreibung

Die Erfindung betrifft ein wartungsarmes betriebssicheres Bohrwerkzeug für den störungsfreien Dauerbetrieb zum Abteufen von Bohrungen in unterirdischen Gesteinsformationen unter Vorgabe eines wählbaren Richtungsverlaufes für das Bohrloch mit einem drehbaren rohrförmigen Gehäuse, einer, vorzugsweise in dem Gehäuse umlaufenden, auf ihrem aus dem Gehäuse vorstehenden Ende einen Drehbohrmeißel tragenden Meißelantriebswelle, mehreren in dem Gehäuse angeordneten Verspannvorrichtungen zur Erzeugung von Richtkräften mit radial ausrichtbaren Kraftkomponenten für das Ausrichten des Bohrwerkzeugs bei einem Bohrbetrieb und ein Verfahren zum Steuern von Tiefbohrungen.

Mit Richtbohren bezeichnet man auch im Sinne der Erfindung Bohrverfahren, die es ermöglichen, die Richtung einer Bohrung zu beeinflussen. Das gesteuerte Bohren wird durch Richtbohrsysteme, wie die Bohrmotor-Knickstück-Kombination oder selbsttätig steuernde Bohrsysteme, sogenannte RSS Systeme (Rotary Steerable Systems), realisiert. Mit diesen Systemen wird der Bohrlochverlauf in jede beliebige Richtung gesteuert. Dafür werden Werte für Neigung und Richtung gemessen und gegebenenfalls Richtungs- und/oder Neigungskorrekturen vorgenommen. Für die Durchführung von Neigungs- und Richtungsveränderungen werden Kräfte benötigt, die diese Veränderungen bewirken. Diese Kräfte werden hydraulisch, elektrisch, mechanisch oder pneumatisch erzeugt. Diese Erzeugung ist technisch aufwendig, teuer und muss all den rauen Bohrbedingungen Stand halten. Eine einfache Krafterzeugung für die Einleitung der Steuervorgänge beim Bohren würde das Richtbohren noch sicherer gestalten, wirtschaftlicher machen und viele neue Anwendungsfelder erschließen.

Im Stand der Technik sind Verfahren und Systeme zum Erzeugen eines Bohrlochs und Vorrichtungen zum verlaufsorientierten Tiefbohren in einer Erdformation bekannt. Die Abweichungen des herkömmlichen Bohrwerkzeugs von einer vorgegebenen Richtung können z.B. infolge Auftretens inhomogener oder anisotroper Erdformation, der Konfiguration des Bohrwerkzeugs, Drehmoments, usw. auftreten.

So ist ein herkömmliches Verfahren zur Ausführung von gerichteten Bohrungen an Offshore-Bohrstellen, insbesondere eine Vorrichtung zur Erzielung einer abgelenkten Schutzrohranordnung, bekannt, bei welcher die Schutzrohrung aus einzelnen Segmenten hergestellt ist, ein Ablenkungsabschnitt an das entfernt liegende Ende des ansonsten geraden Schutzrohrs in einem Winkel angeschweißt ist, das Schutzrohr durch eine vertikal ausgerichtete Führung verlegt wird, wobei die Abbiegung in der gewünschten gerichteten Orientierung gehalten oder positioniert wird und schließlich das Schutzrohr mit der Ablenkung durch den Untergrund getrieben wird, wobei das Schutzrohr seitlich von seiner Eintrittsstelle in den Untergrund in seine abschließende abgelenkte Stellung gebracht wird. Das herkömmliche Verfahren ermöglicht zwar die Ablenkung in einer gewünschten Krümmung und Ausrichtung, um das gerichtete Bohren eines Bohrlochs in den Untergrund einer Offshore-Bohrstelle zu erleichtern, jedoch eignet sich das Verfahren nicht zum kontinuierlichen Tiefbohren, da erst nach Bohrunterbrechung Ablenkungsabschnitte an das Schutzrohr für die Ablenkung der Ablenkungsabschnitte über Tage anzuschweißen sind. Ebenso weist das herkömmliche Verfahren den Nachteil auf, dass eine Steuerung des Drehbohrmeißels lediglich von außen an einem Steuerstand erfolgen kann.

Ein weiteres herkömmliches Verfahren betrifft das Erzeugen eines Bohrlochs in einer Erdformation mit Hilfe einer Bohranordnung, die einen sich in das Bohrloch hineinerstreckenden Bohrstrang, auch Bohrrohrstrang genannt, und einen unten im Bohrloch arbeitenden Motor mit einem Gehäuse und einer Antriebswelle zum Antreiben der Bohrkrone umfasst. Die Antriebswelle ist relativ zur Längsachse des unteren Teils des Bohrstrangs geneigt, wobei das Motorgehäuse mit dem unteren Teil des Bohrstranges so verbunden ist, dass eine Drehung des Motorgehäuses um die Längsachse möglich ist. Die Bohranordnung umfasst ferner übliche Steuerungsmittel zum Steuern der Drehung des Motorgehäuses um die genannte Längsachse relativ zum Bohrstrang. Bei dem herkömmlichen Verfahren wird ein unten im Bohrloch arbeitender Motor verwendet, der ein Gehäuse mit einer einstellbaren Biegung hat, wobei während des Geradeaus-Bohrens die Biegung so eingestellt wird, dass der Biegungswinkel Null ist, während beim Kurvenbohren die Biegung so eingestellt wird, dass der Biegungswinkel der gewünschten Bohrlochkrümmung entspricht. Vor dem Bohren des gekrümmten Bohrlochabschnittes wird als einer der weiteren Nachteile des herkömmlichen Verfahrens der Bohrbetrieb unterbrochen, um anschließend das Motorgehäuse relativ zum Bohrstrang um eine ausgewählte Anzahl von Winkelinkrementen zu verdrehen und das Motorgehäuse in die gewünschte Azimutalrichtung zu bringen.

Eine andere herkömmliche Bohranordnung versucht die Krümmung des Bohrverlaufs durch Ansteuerung sogar von zwei Motoren bereitzustellen, welche einen Drehtisch, einen Bohrstrang, einen ersten unten im Bohrloch arbeitenden Motor mit einer schräggestellten Ausgangswelle und ein Gehäuse, das an eine Ausgangswelle eines zweiten Motors angeschlossen ist, umfasst. Dem zweiten Motor kann selektiv gestattet werden, während des Bohrens eines geraden Bohrlochabschnittes relativ zum Bohrstrang zu rotieren oder während des Bohrens eines gekrümmten Bohrlochabschnittes mit dem Bohrstrang verriegelt zu werden. Bevor mit dem Bohren des gekrümmten Abschnittes begonnen wird, wird der Drehtisch dazu verwendet, den Bohrstrang so auszurichten, dass die Ausgangswelle in die gewünschte Richtung zeigt. Diese Verfahren zeichnen sich durch einen hohen Steuerungsaufwand und die Kompliziertheit der Bohranordnung als solche aus, wobei der hinreichende Erfolg des Richttiefbohrens hier bezweifelt wird.

Für das herkömmliche Richtungsbohren wird auch eine Vorrichtung vorgeschlagen, die eine Exzentrizität aufweist, um eine Kurvenfahrt zu bewirken. Herkömmlicherweise rotiert während des Geradeaus-Bohrens das die Exzentrizität aufweisende Teil mit gleichbleibender Winkelgeschwindigkeit, wobei die Wirkung der Exzentrizität verloren geht. Beim Übergang zum Kurvenbohren wird das die Exzentrizität aufweisende Teil in einer bestimmten Winkelstellung für eine gewisse Zeit stillgesetzt und verbleibt in dieser Winkelstellung solange, bis die Kurvenbahn vollendet ist oder solange, wie die vorgegebene Kurvenbahn eingehalten wird. Verlässt dann der Bohrkopf die vorgesehene Bahnkurve, ist eine Korrektur der Winkelstellung erforderlich, bis die Bohrkurve wieder erreicht ist und der Bohrkopf wieder auf die Bahnkurve eingestellt werden muss. Auf diese Weise muss der Bohrkopf im Laufe einer längeren Kurve im Allgemeinen mehrfach bezüglich einer Winkelstellung positioniert werden. Die Nachteile des herkömmlichen Verfahrens betreffen nicht nur die für die Positionierung des Bohrkopfes erforderliche kostenträchtige Bohrunterbrechung sondern auch die deutliche Aufweitung des Bohrlochs und den hohen Energieaufwand. Auch ein hohes Maß an Steuerungsmaßgaben muss zu beachten sein, die während der Kurvenfahrt einzuhalten und zu überwachen sind.

Im Stand der Technik, wie beispielsweise US 2007/0227775 A1, ist ein steuerbares Drehbohrsystem bekannt, welches Verspannvorrichtungen aufweist, die seitlich im Außengehäuse des Drehbohrsystems angeordnet sind. Die Verspannvorrichtungen bestehen aus mehreren jeweils zwei einander gelenkig gekoppelten zweigliedrigen Verspannelementen. Das eine freie Ende der zweigliedrigen Verspannelemente ist an das Außengehäuse gekoppelt, das andere freie Ende der zweigliedrigen Verspannelemente wird beweglich mittels einer Gleiteinrichtung entlang des Außengehäuses längs der Längsachse des Außengehäuses beweglich geführt. Die Gleiteinrichtung ist mit einem Strang aus einer Shape Memory Alloy-Legierung, auch Formgedächtnis-Legierung (SMA) genannt, verbunden, welcher infolge von einer Beaufschlagung mittels elektrischer Energie erhitzt wird und aus seiner Ruheposition in seine ausgelenkte Position, nämlich Arbeitsposition, gelangt. In der Arbeitsposition wird die Gleiteinrichtung in Richtung zu dem einen freien Ende der Verspannelemente hin gefahren, so dass sich der Abstand zwischen den beiden freien Enden der Verspannelemente verkürzt. Infolge der Verkürzung winkeln die Verspannelemente nach außen unter einer Verkleinerung eines von den beiden Verspannelementen der Verspannvorrichtung umfassenden Winkels radial ab und gelangen aus ihrer gestreckten Ausgangsstellung in ihre angewinkelte Endstellung zur Erzeugung von Richtkräften.

Das herkömmliche Drehbohrsystem weist jedoch aufgrund der Verwendung der Stränge aus Shape-Memory-Alloy-Legierungen (SMA-Legierungen) den Nachteil auf, dass infolge der ansteigenden Anzahl an Übergängen von der Ruheposition in die Arbeitsposition der Gleiteinrichtung und vice versa zurück in die Ruheposition die Stränge aus den Formgedächtnis-Legierungen zunehmend in ihrer Ruheposition mit einer Restdehnung verbleiben, so dass mit steter Zunahme der Übergänge nicht nur der Nachteil der Restdehnungen auftritt, sondern darüber hinaus der weitere Nachteil der Zunahme des Ausmaßes an Restdehnungen der Stränge deutlich sich zeigt.

Infolge der Restdehnung der Stränge aus Shape-Memory-Alloy-Legierungen (SMA-Legierungen) kehrt die Gleiteinrichtung nicht mehr vollständig in ihre erwünschte Ruheposition zurück, so dass die Verspannelemente teilweise in einer angewinkelten Ausgangsstellung verbleiben und nicht mehr ihre ursprüngliche gestreckte Ausgangstellung erreichen. Aufgrund des Verbleibs der Verspannelemente in der angewinkelten Ausgangsstellung wird das Ausrichten des Drehbohrsystems nach vorbestimmten Maßgaben verständlicherweise deutlich erschwert. Das Eingreifen von außen in die Schwenkbarkeit der Verspannvorrichtungen ist zudem unmöglich, das das Auftreten der Restdehnung der herkömmlichen Shape-Memory-Alloy-Legierungen (SMA-Legierungen) zu eigen ist.

Überdies übersieht dieser Stand der Technik den weiteren Nachteil des herkömmlichen Drehbohrsystems, dass mit der Zunahme der Übergänge der durch die Stränge aus Shape-Memory-Alloy-Legierungen (SMA-Legierungen) angesteuerten Gleiteinrichtung aus deren Ruheposition in deren Arbeitsposition und vice versa zurück in die Ruheposition die Restdehung das Ausmaß an Restdehnung stetig zunimmt, so dass stetig das Ausmaß der Anwinkelung der Verspannelemente zueinander zunimmt und damit einhergehend die Verkleinerung des von den beiden Verspannelementen der Verspannvorrichtung umfassenden Winkels steigt. Auch ist ein Ausgleichen durch Beaufschlagen von Verspannelementen benachbarter Verspannvorrichtungen nicht sinnvoll, um die Richtungs- und Neigungskorrekturen durchzuführen und in einer vorbestimmten Richtung das Bohrverfahren mittels des herkömmlichen Drehbohrsystems fortzusetzen, da auch die in Rede stehenden benachbarten Verspannelemente wegen der aus Shape-Memory-Alloy-Legierungen (SMA-Legierungen) bestehenden Stränge Restdehnung als Nachteil zeigen.

Die Folgen für das herkömmliche Drehbohrsystem sind mit dem Entfall der Ausrichtbarkeit und der Steuerbarkeit der Verspannvorrichtungen nicht nur das kostenträchtige Herausziehen, Ersetzen und Wiedereinfahren derselben, sondern auch die Unterbrechung des Abteufens und dessen kostspieliger Stillstand.

Daher ist es auch Aufgabe der Erfindung, ein Bohrwerkzeug bereitzustellen, welches dauernd ansteuerbar ist, dessen Verspannvorrichtungen mit den Spannstücken zuverlässig in die Ausgangstellungen und Endstellungen verfahrbar sind, ohne dass das Ausmaß der radial nach außen schwenkbaren Spannstücke beeinträchtigt zu werden vermag.

Des Weiteren soll ein Bohrwerkzeug bereitgestellt werden, welches nicht die zusätzliche Überwachung der Schwenkung der Spannstücke erfordert.

Abgesehen davon soll das bereitzustellende Bohrwerkzeug keine zusätzlichen Kontrolleinrichtungen erforderlich machen, um sowohl Herstellungs- und Wartungskosten bei dem Dauerbetrieb des Abteufens niedrig zu halten.

Darüber hinaus soll die Robustheit des Bohrwerkzeugs angesichts der harten Bohrbedingungen in großer Tiefe nicht durch eine eingeschränkte Ansteuerung desselben eingeschränkt werden.

Hinzutretend übersieht dieser Stand der Technik den weiteren Nachteil des herkömmlichen Drehbohrsystems mit den aus Shape-Memory-Alloy-Legierungen (SMA-Legierungen) bestehenden Strängen zur Ansteuerung der Spannelemente über die Gleiteinrichtung, dass zwar die Spannelemente mit Hilfe der Stränge aus der Ruheposition in die Arbeitsposition gefahren werden können,- vorausgesetzt es treten keine Restdehnungen auf- aber die Spannelemente sind nicht in der Lage, nur in einem vorbestimmten Maß in Arbeitsposition zu schwenken, da die Stränge wegen ihrer Shape-Memory-Alloy-Legierungen (SMA-Legierungen) nur das Bewegen in zwei Positionen möglich machen, nicht aber dauerhaft in einem vorbestimmten Zustand verbleiben.

Sonach soll das bereitzustellende Bohrwerkzeug angesichts dessen geforderten Ausrichtbarkeit in großen Tiefen nach Maßgabe von Neigung und / oder Azimut auch das Ausmaß an Schwenkbarkeit der Spannstücke nach Vorgaben möglich machen.

Das herkömmliche Drehbohrsystem weist ebenso den Nachteil auf, dass bedingt durch die innere Kristallstruktur der Shape Memory Alloy- Legierung (SMA-Legierung) infolge des Abkühlens der Stränge aus Shape Memory Alloy- Legierung (SMA-Legierung), die die über die Gleiteinrichtung angesteuerten Verspannelemente zum Aus- und Einlenken veranlassen, keine Arbeit durch die Stränge verrichtet werden kann, so dass der Übergang der Spannstücke aus der Arbeitsstellung in die Ruhestellung unvollständig ist, zumindest aber behindert wird.

Daher ist ein Bohrwerkzeug bereitzustellen, dessen Spannstücke aus ihrer ausgeschwenkten Endstellung unbehindert und kraftbeaufschlagt zuverlässig in ihre Ausgangsstellung zurückfahren können.

Im Stand der Technik ist gleichfalls ein herkömmliches Bohrwerkzeug dem Fachmann bekannt, welches Spannstücke aufweist, die nach außen ausfahrbar sind und deren Ausfahrbarkeit hydraulisch gesteuert wird. Die Spannstücke sind an den Kolben von Kolben-Zylinder-Einrichtungen gekoppelt bzw. mit diesen verbunden; die Zylinder sind über Leitungen mit magnetisch angesteuerten Kolben-Zylinder-Einrichtungen verbunden, so dass infolge der in den Leitungen befindlichen Hydrauliklösung die Spannstücke radial nach außen gefahren werden. Das herkömmliche Bohrwerkzeug weist hingegen den Nachteil der Kompliziertheit des Aufbaus auf, da das herkömmliche Bohrwerkzeug eine Vielzahl an Kolben-Zylinder-Einrichtungen aufweist, die einerseits die Hydraulikflüssigkeit mit den magnetisch betätigbaren Kolben kraftbeaufschlagen, andererseits mit Hilfe von weiteren Kolben die Spannstücke nach außen zu drücken vermögen. Ebenfalls zeigt sich, dass. je mehr Kolben-Zylinder-Einheiten und Leitungen derselben in dem Bohrwerkzeug zu finden sind, desto größer das zu vermeidende Überwachungsausmaß und desto geringer die erwünschte Robustheit desselben sind, um den Anforderungen bei dem Tiefrichtbohren gewachsen zu sein.

Daher soll auch ein Bohrwerkzeug bereitgestellt werden, das das über die Ausrichtung und die Ansteuerung hinausgehende Maß an Bauteilen verringert und das hinreichende Maß an Robustheit beim Tiefrichtbohren im Dauerbetrieb bereithält.

Auch die im Stand der Technik bekannte Vorrichtung zur Erzeugung von Druckimpulsen löst nicht das Problem, ein robustes und leicht bedienbares Bohrwerkzeug bereitzustellen, da diese herkömmliche Vorrichtung lediglich auf die Vermeidung von Turbulenzen in der Strömung der Spülung in einem Bohrwerkzeug gerichtet ist, um die Leistung und den Wirkungsgrad nicht zu beeinträchtigen. Die herkömmliche Vorrichtung ermöglicht zwar, dass ein Generator einschließlich Speicher, Kupplung und Lager einer Flügelradwelle in einem axial verlaufenden, mit Öl befüllten und gegenüber dem Bohrgestänge einen zylindrischen Ringspalt bildenden Gehäuse angeordnet ist und in dem Ringspalt die Spülung zum Antrieb des Flügelrades verläuft und oberhalb eines Ölspeichers im Gehäuse ein über die Spülung beaufschlagter Druckausgleichbehälter mit Ausgleichskolben sich befindet, gleichwohl übersieht dieser Stand der Technik das Erfordernis, möglichst robuste und in zwei Positionen schwenkbare, zuverlässig bewegbare Verspannvorrichtungen eines Bohrwerkzeugs bereitzustellen.

Daher soll das Bohrwerkzeug zur Bereitstellung seiner Robustheit leicht und zuverlässig ansteuerbar sein und Spannstücke von Verspannvorrichtungen aufweisen, die trotz Vielzahl an Zyklen stets nicht nur das erwünschte Schwenken aus der Ausgangsstellung in die Endstellung und vice versa, sondern auch das geforderte Ausmaß der Schwenkung in die z.B. Endstellung zuverlässig möglich macht.

Im Stand der Technik zeigt sich auch, dass die Vielzahl an Bauteilen, die die herkömmliche Vorrichtung erforderlich macht, für die herkömmliche Vorrichtung einen hohen Wartungsaufwand erfordert.

Hinzukommend wird das kontinuierliche Richtbohren nach Maßgabe von Neigung und / oder Azimut sowohl durch das stete Überwachen der Magnetventile und deren Funktionsweisen als auch durch die Überwachung der Lage der Kolben in End- und in Ausgangsstellung verkompliziert.

Die störungsfreie Funktion der Magnetventile schließt nicht die der Kolben ein. Daher führt die herkömmliche Vorrichtung zu einem großen Maß an Kontrollaufwand der verschiedenen beweglichen Bauteile und deren Betriebsstatus als weiterer Nachteil,

Zudem verkürzen nachteiligenswert die vielen erforderlichen Bauteile die Wartungsintervalle der herkömmlichen Vorrichtung, so dass der Betrieb derselben kostenträchtig ist.

Hinzukommend benötigt erfahrungsgemäß das Tiefbohren ein robustes Bohrwerkzeug mit wenig störanfälligen Bauteilen, so dass gerade das Zusammenspiel der Magnetventile untereinander und deren Zusammenwirken mit den Verspannvorrichtungen beeinträchtigt werden.

Auch zeigt sich die herkömmliche Vorrichtung als nicht geeignet, das Ausmaß des Ausfahrens der Spannstücke aus der Ausgangsstellung zu begrenzen, gleichwohl die Steuerung des Ausmaßes des Auslenkens der Spannstücke, beispielsweise in Abhängigkeit von der Gesteinsformation, ortsabhängig erwünscht sein kann.

Weitere herkömmliche Verfahren und Vorrichtungen zum Richtbohren schlagen das kraftbeaufschlagte Ansetzen von Greifauflagen gegen die Wandung des Bohrlochs vor, die durch an deren Innenseiten angeordnete Kolben erzeugte Druckbeaufschlagung radial nach außen gedrückt werden können. Die Druckbeaufschlagung der Kolben erfolgt von einer ringförmigen Axialmehrkolben-Taumelscheibenpumpe, deren ringförmige Taumelscheibe unter der Steuerung einer Kupplung, die über eine Oldham-Kupplung Kraft von der Welle anzapft, gezielt gedreht wird. Auch diese Vorrichtung macht ein Höchstmaß an Steuerungskontrolle sowohl des Betriebs der Axialmehrkolben-Taumelscheibenpumpe als auch der Steuerung der verschiedenen Greifauflagen erforderlich. Da das herkömmliche Verfahren zu der deutlichen Erweiterung der Überwachung des Bohrbetriebs führt, ist eine zumindest gleichzeitige Steuerung über einen Steuerstand über Tage empfehlenswert.

Aufgabe der Erfindung soll es sein, ein Bohrwerkzeug bereitzustellen, dessen bauliche Gestaltung der Werkzeuge wesentlich vereinfacht ist.

Weiterhin soll die Lenkung des Bohrwerkzeugs z.B. sowohl vom Standpunkt der Neigung als auch vom Standpunkt des Azimuts ohne den hohen Aufwand an Wartung erfolgen, so dass ein kontinuierliches Richtbohren bereitgestellt wird.

Auch soll die Steuerung des bereitzustellenden Bohrwerkzeugs quasi in Echtzeit erfolgen, was bedeutet, dass bereits ein geringfügiger erforderlicher Krümmungsverlauf oder eine Abweichung des Bohrlochs von vorgegebenen Maßgaben vor Ort durch die in dem Gehäuse eingebaute Steuervorrichtung unter Tage berücksichtigt wird, ohne dass es einer Steuerung oder eines Eingriffs von außen über Tage bedarf.

Abgesehen davon soll das in dem Bohrwerkzeug eingebaute Steuerungssystem einfach sein und sich durch die Verwendung weniger mechanischer Teile im Gegensatz zu den herkömmlichen Vorrichtungen und Verfahren auszeichnen, um ein robustes Bohrwerkzeug und einen wenig störanfälligen Dauerbetrieb des Richttiefbohrens zu gewährleisten.

Auch soll das bereitzustellende Bohrwerkzeug sich durch eine hohe Wirtschaftlichkeit auszeichnen und das selbststätig verlaufskontrollierte Richtbohren in großen Tiefen offshore anbieten.

Auch sollen die Zeiträume zwischen den Wartungen des bereitzustellenden Bohrwerkzeugs beträchtlich vergrößert werden, um kostensparend das Richtbohren untertägig zu betreiben.

Hinzukommend soll die Dauer des Betriebs des Bohrwerkzeugs deutlich gesteigert werden, um das Ausmaß an Ersatzmaterial und die Häufigkeit des Hochbringens des Bohrwerkzeugs betriebswirtschaftlich zu verringern.

Schließlich soll die Übertragung von von in dem Bohrwerkzeug angeordneten Messsensoren ermittelten Daten sowohl eine kompakte und kostensparende Bauweise des Bohrwerkzeugs erfordern als auch die verschleiß- und energiearme Arbeit der Datenübertragung sichern und eine einwandfreie Übertragung der Daten gewährleisten.

Die Aufgaben werden gelöst durch den Hauptanspruch und den Nebenanspruch, die Unteransprüche betreffen bevorzugte Ausgestaltung und Weiterentwicklung der Erfindung.

Die Erfindung löst die Aufgaben durch die Erzeugung von Temperaturdifferenzen. Eine Temperaturerhöhung führt zu Ausdehnung von Materialien, Feststoffen, Flüssigkeiten, wie Hydraulikflüssigkeit, und Gasen. Jede eingeschränkte Ausdehnung führt zu einer Krafterzeugung, die zu Steuerzwecken genutzt werden kann. Die Kombination von Temperaturerhöhung und Abkühlung ermöglicht Steuervorgänge durchzuführen. Weiterhin ist die Erzeugung technisch einfach und mit wesentlich weniger Bauteilen wird das Richtbohren mit derartigen Geräten wirtschaftlich günstiger.

Die Erfindung betrifft ein wartungsarmes betriebssicheres Bohrwerkzeug wie im anhängenden Anspruch 1 definiert.

Ein weiterer Gegenstand der Erfindung ist gerichtet auf ein Verfahren zum verlaufskontrollierten Richtbohren in tiefen Erdschichten unter Verwendung des wartungsarmen betriebssicheren Bohrwerkzeugs für den störungsfreien Dauerbetrieb zum Abteufen von Bohrungen in unterirdischen Gesteinsformationen, wobei
die von Messwertaufnehmereinrichtungen einer Steuervorrichtung festgestellten Daten, insbesondere Messgrößen, z.B. Lagedaten, an die elektronische Messwertverarbeitungseinrichtung der Steuervorrichtung weitergeleitet werden,
die Daten in der Messwertverarbeitungseinrichtung einem Regelkreis, vorzugsweise für die Mehrgrößenregelung, zugeführt werden,
in der Messwertverarbeitungseinrichtung die Daten, insbesondere Lagedaten, als Mess- oder Regelgrößen mit in der Messwertverarbeitungseinrichtung gespeicherten Sollvorgaben als Sollwerte verglichen werden,
im Fall von Abweichungen von den Sollwertvorgaben geänderte Ausgangsgrößen oder Stellgrößen als Signale von der Steuervorrichtung an einen Schalter, insbesondere an einen Ein/Aus-Schalter, zur Temperaturbeaufschlagung des Druckmediums oder an eine Reglereinrichtung zur stufenlosen maßgabengerechten Temperaturbeaufschlagung des Druckmediums, in den Verspannvorrichtungen mittels Zuleitung elektrischer Energie an Heizeinrichtungen derselben weitergeleitet werden.

Ein zusätzlicher Gegenstand der Erfindung bezieht sich auf die Verwendung des Bohrwerkzeug mit
einem rohrförmigen, vorteilhafterweise drehbaren, Gehäuse,
einer, vorzugsweise in dem Gehäuse umlaufenden, wie rotierbaren, auf ihrem unteren aus dem Gehäuse vorstehenden Ende einen Drehbohrmeißel tragbaren oder tragenden, Mei-βelantriebswelle, ein oberes Ende der Meißelantriebswelle an einen, vorzugsweise drehbaren, Bohrrohrstrang koppelbar ist,
mindestens einer, vorzugsweise mehreren in dem Gehäuse angeordneten elektrisch betreibbaren, Verspannvorrichtungen zur Erzeugung von Richtkräften mit radial ausrichtbaren Kraftkomponenten für das Ausrichten des Bohrwerkzeugs bei einem Bohrbetrieb, die Verspannvorrichtungen Stelleinrichtungen aufweisen,
und
einer Steuervorrichtung für die Ansteuerung der Verspannvorrichtungen und deren Stelleinrichtungen,
die Verspannvorrichtungen radial auswärts und einwärts bewegbare, vorzugsweise schildartige in Nuten oder Ausnehmungen der Außenseite des Gehäuses einlassbare, über den Umfang verteilt im Außengehäuse zumindest auf einer Verspannebene angeordnete Spannstücke aufweisen, deren Bewegbarbarkeit temperaturgesteuert ist,
die Stelleinrichtungen an den Spannstücken gekoppelt sind,
die, vorzugsweise als Kolben-Zylinder-Einrichtungen ausgebildeten, Stelleinrichtungen mindestens ein Druckmedium enthalten,
die Stelleinrichtungen mittels Ansteuerung mindestens eines durch Hitze ausdehnbaren Druckmediums betätigbar sind, das Druckmedium ein Gas und / oder eine Flüssigkeit umfasst,
zum störungsfreien Dauerbetrieb, vorteilhafterweise des Tiefrichtbohrens, zum Abteufen von Bohrungen in unterirdischen Gesteinsformationen, insbesondere in großen Tiefen, unter Vorgabe eines wählbaren Richtungsverlaufes für das Bohrloch.

Das erfindungsgemäße wartungsarme betriebssichere Bohrwerkzeug umfasst ein rohrförmiges Gehäuse, oder Außengehäuse auch genannt. In einer Ausgestaltung des erfindungsgemäßen Bohrwerkzeuges kann die Meißelantriebswelle mit ihrem oberen dem Drehbohrmeißel abgewandten Ende an den herkömmlichen Bohrrohrstrang, auch Bohrstrang genannt, auf eine für den Fachmann bekannte Weise gekoppelt sein. Die Meißelantriebswelle kann in einer Ausgestaltung des erfindungsgemäßen Bohrwerkzeuges z.B. drehbar an den Bohrrohrstrang gekoppelt sein, wobei zum Beispiel ein in dem Gehäuse des erfindungsgemäßen Bohrwerkzeugs befindlicher Antrieb, z.B. ein hydraulisch und/oder elektrisch betriebener, die Drehbewegung der Meißelantriebswelle bzw. deren Umlauf hervorrufen, drehbar in dem Gehäuse gelagert und / oder der Bohrrohrstrang an dem Gehäuse des erfindungsgemäßen Bohrwerkzeuges fest gekoppelt sein. In einer anderen Ausgestaltung des erfindungsgemäßen Bohrwerkzeuges kann die Meißelantriebswelle fest an dem Bohrrohrstrang gekoppelt sein, so dass der in dem Gehäuse des erfindungsgemäßen Bohrwerkzeuges drehbar gelagerte Bohrrohrstrang auch die im Gehäuse drehbar gelagerte Meißelantriebswelle zu deren Drehbewegung bzw. Umlauf anzutreiben vermag.

Unter fester Kopplung kann man auch im Sinne der Erfindung verstehen die Arretierung von zwei Bauteilen miteinander ohne Auftreten von Relativbewegungen zwischen diesen.

Im Umlaufrichtung um das Gehäuse oder über den Umfang in dem Außengehäuse verteilt sind zumindest eine, vorzugsweise mehrere, zumindest auf einer Verspannebene ausgerichtete Verspannvorrichtungen angeordnet. Die Vorspannvorrichtungen sind elektrisch betätigbar, indem die Vorspannvorrichtungen oder Teile derselben, wie deren Stelleinrichtungen, beheizt werden können. Die Verspannvorrichtungen zur Erzeugung von Richtkräften mit radial ausrichtbaren Kraftkomponenten für das Ausrichten des Bohrwerkzeugs umfassen radial auswärts und einwärts bewegbare Spannstücke, auch Steuerrippen, Steuerkufen oder Lenkschuhe usw. genannt.

Der Erfindung liegt auch das Prinzip zugrunde, möglichst wenig bewegliche Teile bereitzustellen zum gerichteten Bohren des Bohrwerkzeugs auch in großen Tiefen; so können die Verspannvorrichtungen Stelleinrichtungen aufweisen, wobei die Stelleinrichtungen als Teil der Verspannvorrichtungen Richtkräfte mit radial ausrichtbaren Kraftkomponenten für das Ausrichten des Bohrwerkzeugs bei einem Bohrbetrieb erzeugen können, die auf die an die Stelleinrichtungen gekoppelten Spannstücke, auch Steuerrippen genannt, übertragen werden können, so dass die Spannstücke aus deren Ausgangsstellung in deren Endstellung und wieder zurück in die Ausgangsstellung überzugehen vermögen; die Richtkräfte können durch die Beaufschlagung der Stelleinrichtungen mittels Erhitzung der Stelleinrichtungen oder von Teilen derselben infolge der durch Erhitzung bedingten Wärmeausdehnung hervorgerufen werden. Das Übergehen der Spannstücke und der Stelleinrichtungen oder von Teilen derselben aus der Endstellung in die Ausgangsstellung kann mittels Temperaturerniedrigung und/oder mittels von in Gegenrichtung einwirkenden Richtkräften erzeugt werden. Die Ansteuerung der Verspannvorrichtungen z.B. zur Temperaturbeaufschlagung, zur Temperaturerniedrigung, usw. erfolgt mittels der in dem Gehäuse angeordneten Steuerungsvorrichtung, die von außen von einer Leitzentrale und/oder mittels in ihr implementierter Regelkreise angesteuert werden kann. Unter Temperaturbeaufschlagung kann man im Sinne der Erfindung auch die Temperaturerhöhung, wie das Aufheizen mittels Heizeinrichtung, und die Temperaturerniedrigung, wie das Abkühlen, verstehen. Das erfindungsgemäße Bohrwerkzeug zeichnet sich durch einen robusten, belastbaren Aufbau aus, welches gleichwohl im Dauerbetrieb wartungsarm und betriebssicher im Gegensatz zum Stand der Technik ist.

Die Spannstücke können kraftbeaufschlagt gegen die Wand des Bohrlochs, im Folgenden kurz Bohrlochwandung genannt, angesetzt, also aus ihrer Ausgangstellung oder von dem Gehäuse oder Außengehäuse weg in eine, vorzugsweise definierte oder vorbestimmte, Endstellung nach außen in Richtung zur Bohrlochwandung ausgefahren werden. Die Spannstücke können geneigt zu dem Außengehäuse oder der Meißelantriebswelle gegen die Bohrlochwandung bei dem Übergang aus der Ausgangsstellung in die Endstellung angesetzt werden, indem zumindest gegen ein Ende der Spannstücke die Stelleinrichtungen temperaturgesteuert kraftbeaufschlagt angesetzt oder an diese gekoppelt sind. Ebenso können die Spannstücke parallel zu dem Außengehäuse oder der Meißelantriebswelle aus ihrer Ausgangstellung oder von dem Gehäuse oder Außengehäuse weg in eine, vorzugsweise definierte oder vorbestimmte, Endstellung nach außen in Richtung zur Bohrlochwandung ausgefahren werden, wobei die Stelleinrichtungen temperaturgesteuert gegen beide Enden der Spannstücke kraftbeaufschlagt angesetzt oder an diese gekoppelt sind zwecks Parallelverschiebung der Spannstücke. Auch ist es möglich, dass ein Ende der Spannstücke gelenkig an dem Außengehäuse, das andere Ende der Spanntücke an den Stelleinrichtungen so gekoppelt sind, dass bei Temperaturbeaufschlagung der Stelleinrichtungen die Spannstücke in Endstellung mit der Meißelantriebswelle einen Winkel von 90° oder weniger umfassen; der Scheitelpunkt der Schenkels desWinkels kann dem Drehbohrmeißel zu- oder abgewandt sein.

Von der, vorzugsweise definierten, Endstellung in die Ausgangstellung werden die Spannstücke in oder an das Außengehäuse des erfindungsgemäßen Bohrwerkzeugs infolge Temperaurverringerung des Druckmediums zurückgefahren. Unter wählbar kann im Sinne der Erfindung auch verstanden werden, dass der Richtungsverlauf oder die Bewegungen des Bohrwerkzeugs von außen, z.B. von einer obertägigen Steuer- oder Leitzentrale, z.B. mittels Eingreifen in die in der Messwertverarbeitungseinrichtung gespeicherten Sollvorgaben als Sollwerte, und/oder mittels der in der Messwertverarbeitungseinrichtung gespeicherten Sollvorgaben als Sollwerte bestimmt oder vorbestimmt sein können.

Das Ein- oder Ausfahren der Spannstücke erfolgt durch die Erzeugung von Temperaturdifferenzen eines Druckmediums. Im Sinne der Erfindung werden unter Druckmedium ein Gas und/oder eine Flüssigkeit, z.B. Glyzerin, Hydraulikflüssigkeit, -öle, auch verstanden, die sich nach vorgegebenen Maßgaben durch eine infolge Erhitzung erzeugte Ausdehnung des Materials, wie Längenausdehnung, bzw. der Flüssigkeit und des Gases, wie Volumenausdehnung, sowie durch Verringerung von Längenausdehnung und Volumenausdehnung der Druckmedien infolge Temperaturabsenkung auszeichnen.

Eine Temperaturerhöhung des Druckmediums führt zu der Ausdehnung des Druckmediums. Jede, z.B., eingeschränkte, Ausdehnung führt zu einer Krafterzeugung, die zu den Steuerzwecken des erfindungsgemäßen Bohrwerkzeugs und dessen Verspannungsvorrichtungen und deren Spannstücke genutzt werden können. Durch das Erhitzen des Druckmediums können die Spannstücke gegen die Bohrlochwandung infolge des Übergangs aus ihrer Ausgangsstellung in die Endstellung kraftbeaufschlagt angesetzt und bei Temperaturerniedrigung des Druckmediums wieder infolge des Übergangs aus ihrer Endstellung in die Ausgangsstellung zurückbewegt werden.

Durch das Ausnutzen der steuerbaren temperaturabhängigen Ausdehnung des Druckmediums kann des Weiteren vorteilhafterweise das Ausmaß der Kraftbeaufschlagung der Spannstücke gegen die Bohrlochwandung gesteuert werden, wie unten ausgeführt wird. Das erfindungsgemäße Bohrwerkzeug stellt daher Spannstücke der Verspannvorrichtungen bereit, die nicht nur in der Lage sind, in einem vorbestimmten Maß aus der Ausgangsstellung in die Endstellung zu schwenken, sondern auch in großen Tiefen nach der erforderlichen Maßgabe von Neigung und / oder Azimut das Ausmaß an der stufenlosen Ausfahrbarkeit, wie Parallelverschiebung oder Schwenkbarkeit, der Spannstücke nach diesen Vorgaben, ohne zeitliche Ermüdung oder Einschränkung, einzuhalten.

In einer zusätzlichen Ausbildung des erfindungsgemäßen Bohrwerkzeugs kann das Spannstück mit seinem anderen dem Drehbohrmeißel abgewandten Ende an dem Außengehäuse über eine Feder, wie Schrauben- oder Tellerfeder, gekoppelt sein, die Feder das Spannstück in Ausgangsstellung zu halten vermag, wobei das Spannstück entlang eines radial zu dem Außengehäuse ausgerichteten und an dem Außengehäuse gekoppelten stabförmigen Zapfen oder Leiste geführt ist; das eine dem Drehbohrmeißel zugewandte Ende des Spannstücks ist an dem Außenende des Kolbens gekoppelt sein, so dass bei dem radialen Ausfahren des Kolbens das Spannstück parallel zu dem Außengehäuse oder zu der Mitte-Längsachse desselben oder zu der Meißelantriebswelle ausgefahren und vollflächig gegen die Bohrlochwandung angesetzt werden kann.

Unter einer Stelleinrichtung wird im Sinne der Erfindung auch ein Linearantrieb verstanden, bei welcher bzw. welchem eine Antriebseinrichtung infolge der Erhitzung des in der Stelleinrichtung befindlichen Druckmediums geradlinige oder kurvige Bewegungen beschreiben kann, die auf das Spannstück übertragen werden können, so dass zum Beispiel das Spannstück aus dessen Ausgangsstellung in dessen Endstellung parallel zu der Meißelantriebswelle, der Drehachse des Drehbohrmeißels oder der Mitte-Längsachse des Gehäuses parallelverschoben werden kann und/oder um eine, vorzugsweise um eine Schwenk- oder Drehachse, die senkrecht zu der Meißelantriebswelle, der Mitte-Längsachse des Gehäuses ausgerichtet sein kann, unter Bildung eines Winkels, wie kleiner als 90°, geschwenkt werden kann, welcher Winkel von dem Spannstück einerseits und der Meißelantriebswelle, der Drehachse des Drehbohrmeißels oder der Mitte-Längsachse des Gehäuses andererseits begrenzt ist. Als Antriebseinrichtung eignet sich z.B. ein Stab mit einem Feststoff hohen Längenausdehnungskoeffizienten.

In einer anderen Ausgestaltung des erfindungsgemäßen Bohrwerkzeugs weist die Verspannvorrichtung mindestens eine Stelleinrichtung auf; die temperaturgesteuerte Antriebseinrichtung der Stelleinrichtung, z.B. ein Kolben einer als Stelleinrichtung ausgebildeten Kolben-Zylinder-Einrichtung, kann in Richtung zu der Bohrlochwandung hin, z.B. in die Endstellung, bewegt und in Gegenrichtung zu dem Gehäuse oder Außengehäuse oder zu der Mitte-Längsachse des Gehäuses oder Außengehäuses, z.B. in die Ausgangsstellung, hin wieder zurückbewegt werden. Die Hin- und Rückbewegungen können mittels des in der Stelleinrichtung angeordneten Druckmediums erzeugt werden. Die Hin- und Rückbewegungen der Stelleinrichtung können mittels herkömmlicher Gelenke oder gelenkiger Verbindungen auf das an die Stelleinrichtung gekoppelte Spannstück übertragen werden zum Übergang des Spannstücks aus seiner Ausgangsstelle in seine Endstellung und zurück aus seiner Endstellung in seine Ausgangsstellung. Die Hin- und Rückbewegungen können durch die mittels der Steuervorrichtung angesteuerten Temperaturunterschiede mindestens eines in der Stelleinrichtung befindlichen Druckmediums oder z.B. durch die mittels der Steuervorrichtung angesteuerten Temperaturunterschiede von z.B. mindestens zwei in der Stelleinrichtung befindlichen unterschiedlichen Druckmedien auch erzeugt sein. Die Temperaurunterschiede können erzeugt werden durch die Temperaturerhöhung des Druckmediums, welches durch eine Heizeinrichtung erhitzt wird, und die anschließende -erniedrigung und Abkühlung des Druckmediums infolge fehlenden Aufheizens desselben. Unter Temperatursteuerung wird im Sinne der Erfindung auch verstanden die Steuerung durch Aufheizung und Abkühlung des Druckmediums.

In einer zusätzlichen Ausführungsform des erfindungsgemäßen Bohrwerkzeugs kann das eine in der Stelleinrichtung angeordnete Druckmedium erhitzt werden bzw. sich abkühlen und hierdurch die Stelleinrichtung oder einen Teil derselben, z.B. deren Antriebseinrichtung, und das an sie gekoppelte Spannstück zu der Hin- und Rückbewegung veranlassen. In einer anderen Ausführungsform des erfindungsgemäßen Bohrwerkzeugs können die in einer doppeltwirkenden Stelleinrichtung angeordneten Druckmedien durch das Erhitzen des einen in der Stelleinrichtung befindlichen Druckmediums die Hinbewegung der Stelleinrichtung oder Teil derselben und des Spannstücks und durch anschließendes Erhitzen des anderen in der Stelleinrichtung befindlichen Druckmediums die Rückbewegung der Stelleinrichtung oder Teil derselben und des Spannstücks veranlassen. Unter unterschiedliche Druckmedien können im Sinne der Erfindung auch verstanden werden, Gas und Flüssigkeit; unter unterschiedliche Druckmedien können auch im Sinne der Erfindung auch verstanden werden, verschiedene Vertreter von Gasen oder Flüssigkeiten, die verschiedene Ausdehnungskoeffizienten, wie lineare Ausdehnungskoeffizienten oder Volumen-Ausdehnungskoeffizienten aufweisen.

Eine Ausgestaltung des erfindungsgemäßen Bohrwerkzeugs weist einen Linearantrieb, z.B. als Stelleinrichtung, auf. Unter einem Linearantrieb kann im Sinne der Erfindung auch verstanden werden, ein temperaturgesteuerter Antrieb, der z.B. Bewegungen entlang einer Geraden oder mit einem anderen vorbestimmten Verlauf erzeugt. Der Linearantrieb kann hydraulisch mittels eines durch Hitze ausdehnbaren Druckmediums betätigt werden. Als solcher für die Verspannvorrichtung eignet sich zum Beispiel als Stelleinrichtung eine Kolben-Zylinder-Einrichtung, an deren, z.B. radial auswärts und einwärts bewegbaren, Kolben das an dem Außengehäuse in Ausgangstellung anliegende Spannstück gekoppelt ist. Die Kolben-Zylinder-Einrichtung kann in einer Ausbildung eine mit dem Druckmedium befüllte Kammer aufweisen, die mit einem Zylinderraum der Kolben-Zylinder-Einrichtung druckmediumdurchgängig oder -lässig verbunden ist, in welchem Zylinderraum der Kolben betreibbar ist. So kann der Kolben in dem Zylinderraum mittels Beaufschlagung des Druckmediums durch Temperaturerhöhung aus diesem getrieben oder infolge Abkühlung des Druckmediums wieder in diesen getrieben werden. In einer einfachen Ausbildung des erfindungsgemäßen Bohrwerkzeugs wird der Zylinderraum und/oder ein den Zylinderraum begrenzender Mantel mit Hitze mittels einer Heizeinrichtung beaufschlagt; in einer anderen Ausgestaltung des erfindungsgemäßen Bohrwerkzeugs kann die mit dem Zylinderraum druckmediumdurchgängig verbundene Kammer des Kammergehäuses mit Hitze beaufschlagt werden, so dass das in dem Zylinderraum bzw. das in dem Zylinderraum und der Kammer befindliche Druckmedium infolge Volumenausdehnung den Kolben austreibt. Ebenso können in einer ganz anderen Ausgestaltung des erfindungsgemäßen Bohrwerkzeugs sowohl die mit dem Zylinderraum verbundene Kammer als auch der Zylinderraum mit Hitze dergestalt beaufschlagt werden, dass das Druckmedium den Kolben austreibt. So kann zudem die Hitzebeaufschlagung von Kammer mit dem Zylinderraum oder nur von Kammer oder von Zylinderraum je nach Erfordernis vor Ort angesteuert sein. Im Sinne der Erfindung wird unter Verbinden auch die für das Druckmedium über Leitungen, Kanäle, oder dergleichen durchgängige Verbindung verstanden. Vorzugsweise ist der Kolben infolge Erhitzung des Druckmediums, z.B. radial zu der Mitte-Längsachse des Gehäuses, zum, insbesondere kraftbeaufschlagten, Ansetzen des Spannstücks gegen eine Bohrlochwandung bei Übergang von der Ausgangsstellung in die Endstellung verschoben. Auch ist der Kolben infolge Erkaltung des Druckmediums, vorzugsweise radial zu der Mitte-Längsachse des Gehäuses, zum Ansetzen des Spannstücks an dasselbe bei Übergang von der Endstellung in die Ausgangsstellung verschoben.

Auch kann in einer weiteren Ausbildung des erfindungsgemäßen Bohrwerkzeugs die Kolben-Zylinder-Einrichtung als Stelleinrichtung als doppeltwirkender Zylinder ausgebildet sein, bei welcher Kolben-Zylinder-Einrichtung der Kolben zwei gegenüberliegenden Kolbenflächen aufweist, so dass die Bewegungen des in dem Zylinder bzw. -raums bewegbaren Kolbens durch die sich abwechselnde Beaufschlagung seiner beiden Kolbenflächen mit Druckmedium oder Druckmedien gezielt angesteuert werden können. In einer besonderen Ausgestaltung des erfindungsgemäßen Bohrwerkzeugs sind die Kolben der gegenüber liegenden Kolben-Zylinder-Einrichtungen, z.B. derselben Verspannebene, miteinander zusammengekoppelt, so dass das Ausfahren des einen Kolbens aus einer Ausgangsstellung in die Endstellung zu dem Einfahren des gegenüber liegenden Kolbens aus dessen Endstellung in dessen Ausgangstellung führt; auch kann die Kopplung der gegenüber liegenden Kolben gleichfalls soweit angesteuert werden, dass nur bei Bedarf die Bewegungen der Kolben gegensinnig verlaufen.

Der Kolben ist mit seinem Außenende an dem Spannstück vorteilhafterweise gekoppelt. Infolge der Erhitzung des Druckmediums und Ausdehnung desselben kann der Kolben, vorzugsweise radial zu der Mitte-Längsachse des Außengehäuses, aus seiner Aus- in seine Endstellung verschoben werden, zumindest in Richtung hin zu dem an ihm gekoppelten Spannstück, so dass das Spannstück gegen die Bohrlochwandung kraftbeaufschlagt anzuschlagen vermag. Infolge der Erkaltung oder des Abkühlens des Druckmediums, z.B. infolge der Temperaturerniedrigung des Druckmediums durch z.B. Unterbrechung der Aufheizung desselben durch die Heizeinrichtung, fährt der Kolben wieder aus seiner Endstellung in seine Ausgangsstellung und damit auch das Spannstück in die seinige Ausgangsstellung zurück. Im Gegensatz zu dem vorbekannten Stand der Technik zeichnet sich das erfindungsgemäße Bohrwerkzeug unter Anderem dadurch aus, dass der Einbau zusätzlicher Druck erzeugender Einrichtungen, wie Pumpen oder Axialmehrkolben-Taumelscheibenpumpe, entfällt, sondern lediglich das Temperaturerhöhung und Temperaturerniedrigung des Druckmediums in einem begrenzten Raum bereits für die Beweglichkeit der Spannstücke hinreichend sind. Die Bauweise des erfindungsgemäßen Bohrwerkzeugs wird vorteilhafterweise hierdurch vereinfacht. Auch kann die Stelleinrichtung als Kolben-Zylinder-Einrichtung mit zwei Kolben ausgebildet sein, deren zu den Spannstücken zugewandten Außenenden an die beiden Enden eines Spannstücks gekoppelt sind und infolge Druckmediumerhitzung parallel zueinander ausgefahren werden können zwecks Parallelverschiebung des Spannstücks von der Aus- in die Endstellung.

Hinzukommend zeigt sich der weitere Vorteil, dass im Gegensatz zum Stand der Technik auch das Ausmaß des Ausfahrens der Spannstücke nach außen in Abhängigkeit von dem Ausmaß der Erhitzung des Druckmediums maß- oder vorgabegerecht erfolgen kann; zum Beispiel ist das kontrollierte Ausfahren der Spannstücke erwünscht in Abhängigkeit von der Art der Gesteinsformationen.

Auch kann auf einfache aber vorteilhafte Weise die Kraftbeaufschlagung des Spannstücks, mit welcher Kraft das Spannstück gegen die Bohrlochwandung angesetzt ist, wie unten weiter ausgeführt wird, nach vorbestimmten Maßgaben angesteuert werden.

In einer weiteren Ausgestaltung des erfindungsgemäßen Bohrwerkzeugs können zumindest drei Kolben-Zylinder-Einrichtungen auf einer Verspannebene in Umlaufrichtung in dem Außengehäuse gleich voneinander beabstandet angeordnet sein.

Im Sinne der Erfindung wird unter Anordnung in dem Außengehäuse auch die Anordnung an dem Außengehäuse verstanden.

In einer zusätzlichen Ausgestaltung des erfindungsgemäßen Bohrwerkzeugs können vier Kolben-Zylinder-Einrichtungen auf einer Verspannebene unter Zentriwinkel von 90° in Umlaufrichtung in dem Außengehäuse angeordnet sein.

Durch die Anordnung von zumindest vier Kolben-Zylinder-Einrichtungen in dem Au-βengehäuse und Kopplung von mindestens vier Spannstücken an dieselben wird eine leicht kontrollierbare Lenkung des Drehbohrmeißels bevorzugterweise gewährleistet.

Nicht nur die leicht kontrollierbare Lenkung des Drehbohrmeißels des erfindungsgemäßen Bohrwerkzeugs, sondern auch die Unterstützung des geradlinigen Tiefbohrens ohne hohen Aufwand an mechanischen Bauteilen und Steuerung wird mit dem erfindungsgemäßen Bohrwerkzeug durch das gleichzeitige Ausfahren aller Spannstücke durch die vier Kolben-Zylinder-Einrichtungen gegen die Bohrlochwandung im Gegensatz zum Stand der Technik bereit gestellt.

In einer anderen Ausgestaltung des erfindungsgemäßen Bohrwerkzeugs können die Kolben-Zylinder-Einrichtungen bzw. die Linearantriebe als Stelleinrichtungen in zwei Verpannebenen in vertikaler Richtung, beispielsweise fluchtend übereinander liegend, in dem Außengehäuse angeordnet sein. Diese können entlang der Mitte-Längsachse des Außengehäuses, vorzugsweise senkrecht zu dieser, angeordnet sein. In einer zusätzlichen Ausgestaltung des erfindungsgemäßen Bohrwerkzeugs können Linearantriebe ebenfalls in zwei Verspannebenen in vertikaler Richtung dergestalt angeordnet sein, dass die Linearantriebe der einen Verspannebene zu den Linearantrieben der anderen Verspannebene in Umfangsrichtung zueinander versetzt unter Bildung eines Versatzwinkels, von beispielsweise 45° , angeordnet sein können. Im Falle der Verwendung von Verspannvorrichtungen in zwei Verspannebenen sind die Versatzwinkel vorteilhafterweise halb so groß wie der Winkel des Abstandes zwischen denselben.

Auch wenn die Linearantriebe mit ihren zugeordneten Verspannstücken in zwei Verspannebenen in dem Außengehäuse sich befinden, ist die Anzahl der Bauteile verglichen mit der Anzahl der Bauteile im vorgenannten Stand der Technik weit geringer. Auch die Anordnung von Verspannvorrichtungen in zwei Verspannebene erhöht bevorzugterweise zudem die Wirksamkeit des gerichteten Tiefbohrens mit Hilfe des erfindungsgemäßen Bohrwerkzeugs, was in Gesteinsfomation hoher Härte gefordert ist.

Des Weiteren ist ebenso die Anzahl der beweglichen Bauteile im Fall des Verbaus von Linearantrieben in zwei Verspannebenen deutlich geringer als der Einbau beweglicher Bauteilen im Stand der Technik, da lediglich die Linearantriebe entweder ein durch Temperaturänderungen ausdehnbares Material und/oder einen mit Gas und/oder Flüssigkeit befüllten Raum benötigen.

Die Vereinfachung der zu verwendenden Bauteile bei der Bereitstellung des erfindungsgemäßen Bohrwerkzeugs führt zu dem Vorteil, dass die Rückstellung des Spannstücks aus seiner End- in die Ausgangsstellung quasi selbsttätig sich einstellt, hingegen im Stand der Technik stets die Rückstellung des Spannstücks die Druckbeaufschlagung des Kolbens auf seiner rückwärtigen Seite oder das Eingreifen einer Rückstellfeder erfordert.

Von besonderem Vorteil ist, dass die Rückstellung des Spannstücks, wie dessen Übergang aus der End- in die Ausgangstellung, in den Ausgestaltungen des erfindungsgemäßen Bohrwerkzeugs keiner Überwachung bedarf, da die Rückstellung ohne Eingriff von außen stets erfolgt, hingegen die Rückstellung des Spannstücks herkömmlicher Bohrwerkzeuge wegen des aktiven Eingriffs von außen hinzukommend zu kontrollieren ist.

Durch diese weiteren Vorteile erweisen sich die verschiedensten Ausgestaltungen des erfindungsgemäßen Bohrwerkzeugs ebenfalls weitgehend frei von der Gefahr des Blockierens des Bohrwerkzeugs, die infolge der Beibehaltung des Reib- und Kraftschlusses des Spannstücks mit der Bohrlochwandung, wie im Stand der Technik zu beobachten ist, eintreten kann; hinzukommend bedingt das unzureichende Einfahren des Spannstücks herkömmlicher Bohrwerkzeuge durch das fehlerhafte Zusammenarbeiten von deren vielen Bauteilen zurück in die Ausgangstellung eine unzureichende Ausrichtung herkömmlicher Bohrwerkzeuge beim Tiefbohren.

Darüber hinaus führt bereits erfahrungsgemäß die Beschränkung auf wenige mechanisch bewegliche Bauteile in einem Bohrwerkzeug zu der erwünschten Robustheit in dessen Ausgestaltung und zu dem geringeren Wartungsaufwand, so dass infolgedessen das störungsfreie kontinuierliche Richtbohren in der großer Tiefe mit Hilfe des erfindungsgemäßen Bohrwerkzeugs gewährleistet ist.

In einer weiteren Ausgestaltung des erfindungsgemäßen Bohrwerkzeugs erstreckt sich das Spannstück über die, vorzugsweise gesamte, Länge des Außengehäuses. Das eine Ende des Spannstücks, welches dem Drehbohrmeißel zugewandt ist, kann an dem Kolben der Kolben-Zylinder-Einrichtung gekoppelt und das andere, dem Drehbohrmeißel abgewandte Ende der Spannstücke, an dem Außengehäuse angelenkt sein. Das eine, dem Drehbohrmeißel zugewandte Ende der Spannstücke, kann überdies an seiner Spitze bogenförmig in Richtung hin zu dem Drehbohrmeißel umgebogen oder gekröpft sein.

Auch kann in einer der Erfindung nicht gehörende Ausgestaltung des Bohrwerkzeugs die Stelleinrichtung der Verspannvorrichtung einen Stab als Antriebseinrichtung mit einem Material als Druckmedium umfassen, an dessen Außenende das Spannstück gekoppelt ist, welches Material von einer Heizeinrichtung der Länge nach zum Aufheizen des Materials durchzogen sein kann; ebenso kann die Heizeinrichtung z.B. als Folie oder Matte oder Manschette zusätzlich oder alternativ hierzu gegen den das Druckmedium enthaltenden Stab vollflächig angesetzt sein, z.B. diesen ummanteln.

So kann die Verspannvorrichtung mit einer Stelleinrichtung ausgebildet sein, welche Stelleinrichtung als Linearantrieb - oder -motor ausgestaltet ist, der geradlinige oder gekurvte Bewegungen, infolge Temperaturbeaufschlagungen, auszuführen vermag. Der Linearantrieb weist vorzugsweise mindestens einen Stab mit einem infolge Hitze linear ausdehnbaren Material. oder auch fester Stoff oder Feststoff genannt, als Druckmedium, z.B. eine Aluminiumlegierung, auf. Der Stab ist gleichfalls mit einer Heizeinrichtung versehen, die den Stab ummanteln kann, Infolge der Erhitzung des Materials des Stabs erfolgt eine beträchtliche Längenausdehnung des Stabs, so dass die Längenausdehnung des Stabs gleichfalls das an dem Stab, vorzugsweise gelenkig, gekoppelte Spannstück nach außen zum kraftbeaufschlagten Ansetzen, auch Ausfahren oder Bewegen genannt, gegen die Bohrlochwandung zu treiben oder zu bewegen vermag. Der Linearantrieb kann auch zwei parallel zueinander ausgerichtete von einander beabstandete Stäbe mit einem infolge Hitze ausdehnbaren Material. oder auch fester Stoff oder Feststoff genannt, als Druckmedium, z.B. eine Aluminiumlegierung, aufweisen, deren Außenenden an ein Spannstück gekoppelt sind. Infolge Erhitzung der Stäbe erfahren die Stäbe eine Längenausdehnung, die ausreichend ist, so dass das Spannstück parallel zu dem Außengehäuse oder zu der Mitte-Längsachse desselben oder zu der Meißelantriebswelle verschoben werden kann.

Auch kann in einer weiteren Ausbildung des erfindungsgemäßen Bohrwerkzeugs die Stelleinrichtung als doppeltwirkende zur Aufnahme von mindestens zwei Druckmedien ausgebildet sein, so dass sowohl das Ausfahren des an die Stelleinrichtung gekoppelten Spannstücks in Richtung zu der Bohrlochwandung mittels Temperaturbeaufschlagung nur des einen Druckmediums hin in die Endstellung und dessen Wiedereinfahren zurück in Richtung zu dem Gehäuse des erfindungsgemäßen Bohrwerkzeugs hin mittels Temperaturbeaufschlagung des anderen Druckmediums kraftbeaufschlagt in die Ausgangsstellung nach dem Abkühlen oder während des Abkühlens des einen Druckmediums vorteilhafterweise erfolgen. In einer weiteren Ausführungsform des erfindungsgemäßen Bohrwerkzeugs können als Druckmedien für die doppeltwirkende Stelleinrichtung dieselben Druckmedien als auch unterschiedliche Druckmedien eingesetzt werden. So eignen sich bevorzugterweise für das Ein- und Ausfahren der Spannstücke in den doppeltwirkenden Stelleinrichtungen dieselben auf die Spannstücke einwirkenden Feststoffe, Gase oder Flüssigkeiten, wobei Feststoffe übereinstimmenden oder einander verschiedene lineare Ausdehnungskoeffizienten, Gase und Flüssigkeiten übereinstimmende oder einander verschiedene Volumen-Ausdehnungskoeffizienten aufweisen können.

Ebenso können in den doppeltwirkenden Stelleinrichtungen für das Ausfahren der Spannstücke Feststoffe für das Einfahren derselben beim Übergang von der Ausgangs- in die Endstellung, hingegen Gase oder Flüssigkeiten als Druckmedien, oder vice versa, beim Übergang von der End- in die Ausgangstellung eingesetzt werden.

Daher können in einer besonderen Ausgestaltung des erfindungsgemäßen Bohrwerkzeugs die Stelleinrichtungen auch einander unterschiedliche Druckmedien aufweisen, deren Verwendung nach Anforderung und Vorgaben des zum Abteufen vorgesehenen Erdreichs abhängen kann, so dass auch hierdurch sich die hohe Anpassbarkeit des erfindungsgemäßen Bohrwerkzeugs im Gegensatz zum Stand der Technik an die Erfordernisse vor Ort zeigt, um auch die erwünschte Feinsteuerung des erfindungsgemäßen Bohrwerkzeugs bei gleichzeitiger hinreichender Belastbarkeit des erfindungsgemäßen Bohrwerkzeugs zu gewährleisten. Z.B. kann als Stelleinrichtung der Linearantrieb als doppeltwirkender mit z.B. zwei Stäben mit einem infolge Hitze ausdehnbaren Material als Druckmedium, z.B. eine Aluminiumlegierung, aufweisen, so dass der eine Stab infolge Temperaturbeaufschlagung das an den einen Stab, vorzugsweise gelenkig, gekoppelte Spannstück nach außen zum kraftbeaufschlagten Ansetzen gegen die Bohrlochwandung und der zweite Stab infolge Temperaturbeaufschlagung das auf geschickte Weise an den zweiten Stab über Umlenkgetriebe, -rollen gekoppelte Spannstück nach innen zum kraftbeaufschlagten Ansetzen gegen das Außengehäuse des erfindungsgemäßen Bohrwerkzeugs oder Einbuchtungen in demselben bewegen lässt. Ebenso ist es möglich, dass selbststätig der eine Stab bei Erreichen der Endstellung des Spannstücks sich aus dem Spannstück aus- und der zweite Stab sich hingegen an dieses ein- oder anzukoppeln vermögen und selbststätig bei Erreichen der Ausgangsstellung des Spannstücks der eine Stab sich wieder an das Spannstück an- oder in- und der zweite Stab sich hingegen aus diesem auszukoppeln vermögen. Unter gelenkiger Kopplung wird im Sinne der Erfindung auch verstanden eine herkömmliche Schraub-, Bolzen-, Stiftverbindung, ein herkömmliches Lager, wie Wälz-, Radial-, Axiallager, usw., verstanden.

Infolge der Temperaturbeaufschlagung des Druckmediums in der Kolben-Zylinder-Einrichtung kann der Kolben radial zu der Mitte-Längsachse des Außengehäuses nach außen stufenlos so weit getrieben werden, dass das an ihn gekoppelte Spannstück um seinen Anlenkpunkt geschwenkt und gegen die Wandung des Bohrlochs unter Bildung eines Öffnungswinkels angedrückt wird, wobei der durch Schwenkung dargestellte Öffnungswinkel, der von dem Außengehäuse und dem Spannstück begrenzt ist, einen Betrag von 0 bis 45°, vorzugsweise 0 - 30°, noch mehr bevorzugt 10°, 15° oder 25°, aufweisen kann.

In einer anderen Ausgestaltung des erfindungsgemäßen Bohrwerkzeugs sind an den beiden Enden des Spannstücks die Außenenden von Kolben von zwei auf- oder übereinander angeordneten Kolben-Zylinder-Einrichtungen gekoppelt. Infolge Temperaturbeaufschlagung bewegen sich die Spannstücke parallel zu der Mitte-Längsachse des Außengehäuses und/oder der Meißelantriebswelle oder zu dem Außengehäuse und werden im Wesentlichen vollflächig gegen die Wandung des Bohrlochs kraftbeaufschlagt angesetzt. Diese Ausgestaltung ermöglicht einen vollflächigen Anschlag der Spannstücke. Der Eingriff des Spannstücks in die Oberfläche der Wandung des Bohrlochs kann darüber hinaus durch das Ausfahren nach vorbestimmten Maßgaben durch die maßgabengerechte Temperaturbeaufschlagung vorteilhafterweise, falls erforderlich, gesteuert werden. Auch dieser Vorteil dient der Bereitstellung des fein kontrollierten auch geringfügigen Krümmungsverlaufs der Tiefbohrung mit Hilfe des erfindungsgemäßen Bohrwerkzeugs. Vollflächiges kraftbeaufschlagtes Ansetzen der Spannstücke kann darüber hinaus erforderlich sein in Abhängigkeit von der Zusammensetzung der durchzubohrenden Gesteinsformation.

In einer weiteren Ausgestaltung des erfindungsgemäßen Bohrwerkzeugs eignen sich als Druckmedium beispielsweise Flüssigkeiten, wie Öle, Hydrauliköle, Ölmischungen.

Weiterhin sind in anderen der Erfindung nicht gehörenden Ausführungsformen des Bohrwerkzeugs die Druckmedien als Feststoffe, auch Materialien oder feste Stoffe genannt, ausgebildet, wobei die Feststoffe einen Ausdehnungskoeffizienten, auch Wärme- oder Temperaturausdehnungskoeffizienten genannt, aufweisen können, welcher Längenausdehnungskoeffizient einen Betrag, z.B. bei 0°C, 18°C oder 20°C, von 1,5 bis 30,0 x 10⁻⁶K⁻¹, vorzugsweise 3,0 bis 24 x10⁻⁶K⁻¹, noch mehr bevorzugt 12,0 bis 22,0 x 10⁻⁶K⁻¹ oder 10,0 bis 18,0 x 10⁻⁶K⁻¹ umfassen kann. Hierbei eignen sich als Feststoffe, beispielsweise Aluminium, Kupfer, Stahl oder Legierungen derselben oder Mischungen der Legierungen. Folgende Feststoffe mit einem Längenausdehnungskoeffizienten, z.B. bei 0°C, 18°C oder 20°C, der mit der Größe α auch bezeichnet werden kann, sind zum Beispiel vorteilhaft von 23,1 x 10⁻⁶K⁻¹ , z.B. Aluminium, 28,9 x 10⁻⁶K⁻¹, z.B. Blei, 13,4 x 10⁻⁶K⁻¹, z.B. Nickel, 11,8 x 10⁻⁶K⁻¹, z.B. Eisen, 8,6 x 10⁻⁶K⁻¹, z.B. Titan, 30,2 x 10⁻⁶K⁻¹, z.B. Zink, 16,5 x 10⁻⁶K⁻¹ , z.B. Kupfer. Unter Ausdehnungskoeffizient kann auch im Sinne der Erfindung ein linearer oder thermischer Ausdehnungskoeffizient verstanden werden. Der lineare Ausdehnungskoeffizient, der mit α auch bezeichnet werden kann, kann die Einheit 1/K aufweisen und angeben,um welchen Bruchteil seiner Länge bei einer vorbestimmten Temperatur, z.B. 0°C, 18°C oder 20°C usw., sich ein, z.B. stabförmiger, Körper, z.B. bei einer Temperaturerhöhung, z.B. von 1K (= 1°C), zu verlängern bzw. auszudehnen vermag. Als Materialkonstante kann er abhängen zumindest prinzipiell von Temperatur und Druck. Unter Ausdehnungskoeffizient kann auch im Sinne der Erfindung ein Raumausdehnungskoeffizient, kubischer Ausdehnungskoeffizient oder Volumen-Ausdehnungskoeffizient verstanden werden; so kann der Ausdehnungskoeffizienten als linearer oder Längen-Ausdehnungskoeffizienten, wie α, bei 0°C oder 18°C oder 20°C von 1,5 bis 30,0 x 10⁻⁶K⁻¹, vorzugsweise 3,0 bis 24 x 10⁻⁶K⁻¹, noch mehr bevorzugt 10,0 bis 18,0 x 10⁻⁶K⁻¹, betragen. In einer Ausgestaltung des erfindungsgemäßen Bohrwerkzeugs kann der lineare Ausdehnungskoeffizient α/(10⁻⁶K⁻¹) oder α x 10⁻⁶/⁰C⁻¹ von Feststoffen, z.B. bei 0°C 1,5 - 32,0, insbesondere 2,0 - 28, noch mehr bevorzugt 3,0 - 25, z.B. bei 18°C oder 20°C, betragen. Auch kann der lineare Ausdehnungskoeffizient, wie α, (in 10⁻⁶ 1/K oder 10⁻⁶/K⁻¹), z.B. zwischen 0°C und 100°C, von 1,5 bis 32,0; insbesondere von 1,8 bis 30,0 oder von 2,0 - 28, noch mehr bevorzugt 3,0 -25, betragen.

Als Druckmedium, welches einen oder mehrere Feststoffe aufweisen kann, können verwendet werden Aluminium, Stahl, Gusseisen, Messing, Aluminiumlegierungen, Nickel, Magnesiumoxid, Nickel-legierungen usw. So können Feststoffe mit einem Längen-Ausdehnungskoeffizienten α/(10⁻⁶K⁻¹) oder Längen-Ausdehnungskoeffizienten α (x 10⁻⁶K⁻¹) oder Längen-Ausdehnungskoeffizienten α in 10⁻⁶K⁻¹, wie Blei mit 31, Zinklegierungen mit 24 - 28, Zinn mit 23,0, Messing mit 17,5 - 19,1, Bronze 16,8 - 18,8, Stahl, austenitisch 16 - 17,0, Kupfer 16,8, Nickellegierungen 11 - 18, Stahl, ferritisch, 10,5 -13,0, Gusseisen 9 - 12, usw. (insbesondere für 0 .... 100°C) verwendet werden.

Es zeigt sich, dass gerade in den Ausgestaltungen des Bohrwerkzeuges bei Verwendung von Körpern, auch Druckmedien genannt, die Feststoffe enthalten, die Spannstücke infolge der Temperaturbeaufschlagung des aus Metall, Flüssigkeit oder Gasen bestehenden Druckmediums -unabhängig von der Anzahl der Übergänge bzw. Zyklenstets vollständig aus ihrer Endstellung in die Ausgangsstellung zurückzukehren vermögen, so dass die als besonderer Nachteil in dem herkömmlichen steuerbaren Drehbohrsystem gerade bei Verwendung von SMA-Legierungen beobachtende Restdehnung der Shape-Memory-Alloy-Legierungen (SMA-Legierungen) nicht zu beobachten ist. Durch das vollständige Zurückfahren der Spannstücke von der Endstellung in die Ausgangsstellung wird die Kontrolle des erfindungsgemäßen Bohrwerkzeuges bez. der Überwachung der Schwenkung der Spannstücke und des Ausmaßes derselben nicht erfordert.

Auch zeigt sich, dass bei dem Bohrwerkzeug bei dem Zurückfahren der Spannstücke in deren Ausgangsstellung das Druckmedium Arbeit im Gegensatz zu dem mittels Strängen aus Shape Memory Alloy- Legierung (SMA-Legierung) angesteuerten Verspannelementen, auch Spannstücken genannt, der Verspannvorrichtungen des herkömmlichen steuerbaren Drehbohrsystems zu verrichten vermag, so dass keine Beeinträchtigung des Zurückschwenkens der Spannstücke des erfindungsgemäßen Bohrwerkzeuges sich zeigt und damit die, soweit erwünschte, Richtungsbestimmung des erfindungsgemäßen Bohrwerkzeugs mithilfe der Spannstücke zuverlässigerweise eintritt.

Ebenso können in einer ganz anderen Ausgestaltung des Bohrwerkzeuges Verbindungen z.B. mit einem Längen-Ausdehnungskoeffizienten α/(10⁻⁶K⁻¹) (oder α in 10⁻⁶K⁻¹) von 30,0 bis 50,0, vorzugsweise 35,0 bis 45,0, (bei 20°C oder 18°C) in den Stelleinrichtungen verwendet werden. So eignen sich auch Verbindungen mit einem Längen-Ausdehnungskoeffizienten a in 10⁻⁶K⁻¹ (oder α/(10⁻⁶K⁻¹)) 40,0 bei 20°C oder 18°C, z.B. NaCl-Verbindungen, als Druckmedium in den Stelleinrichtungen der Verspannvorrichtungen des erfindungsgemäßen Bohrwerkzeugs.

In zusätzlichen Ausgestaltungen des Bohrwerkzeugs eignen sich als Feststoffe sogenannte Memory-Metalle. Die Memory-Metalle als Feststoffe sind ebenso dem Fachmann bekannt und können Legierungen mit z. B. 52 bis 57 % Nickel, ggf. einigen Prozent Kobalt, Rest Titan, aufweisen, die nach Verformung bei hohen Temperaturen und niedrigen Temperaturen in ihre ursprüngliche Form wieder zurückkehren können. Zum Beispiel eignen sich auch solche Memory-Metalle, insbesondere für die Spannstücke der Verspannvorrichtungen, in Form von Stäben, wobei infolge der Beaufschlagung der Stäbe mit Hitze die Stäbe durch Längenausdehnung radial zu der Mitte-Längsachse des Außengehäuses bzw. zu deren Mitte-Längsachse die Spannstücke nach außen gegen die Bohrlochwandung angesetzt werden. Gerade diese Ausgestaltungen des erfindungsgemäßen Bohrwerkzeugs erfordern sehr geringen Raumbedarf in dem Außengehäuse. Als Außengehäuse kann auch im Sinne der Erfindung das Gehäuse des erfindungsgemäßen Bohrwerkzeugs verstanden werden.

Auch können in anderen Ausgestaltungen des Bohrwerkzeugs als Feststoffe Metalllegierungen verwendet werden, wie auch Bimetallwerkstoffe, soweit diese einen hinreichende, dem Fachmann bekannten Längenausdehnungskoeffizienten oder auch Temperaturausdehnungskoeffizienten aufweisen. Im Sinne der Erfindung wird auch unter Wärme- oder Temperaturausdehnungskoeffizient eine Materialkonstante verstanden, die die Reaktion des Feststoffes beschreibt, wenn der Feststoff einer Temperaturänderung ausgesetzt ist.

Auch eignen sich als Druckmedien Flüssigkeiten, insbesondere Lösungen, Öle oder Ölgemische, welche einen derart hinreichenden Wärmeausdehnungskoeffizienten bzw. Volumen-Ausdehnungskoeffizienten aufweisen, so dass die Spannstücke gegen die Bohrlochwandungen ansetzbar sind. Da sich Flüssigkeiten als Druckmedien im Allgemeinen bei Erwärmung vorteilhafterweise stärker ausdehnen können als Feststoffe, eignen sich diese gleichfalls zur Verwendung in der Kolben-Zylinder-Einrichtung als Stelleinrichtung der Verspannvorrichtung. Hierbei können die Volumen-Ausdehnungskoeffizienten, auch mit γ bezeichnet, von 5,0 bis 20,0 x 10⁻⁴, vorzugsweise von 7,2 bis 16,3 x 10⁻⁴, noch mehr bevorzugt 12 bis 15 x 10⁻⁴, (in 1/K bzw. 1/°C), z.B. bei 18 °C oder bei 20°C, betragen. Flüssigkeiten mit kubischem oder Volumen-Ausdehnungskoeffizienten, der viel größer als der lineare Ausdehnungskoeffizient bei Feststoffen sein kann, eignen sich vorteilhafterweise ebenso als Druckmedium, die einen Volumen-Ausdehnungskoeffizient haben, wie γ /(10⁻³K⁻¹) oder γ (in 10⁻³K⁻¹), von 0,4 bis 2,0, vorzugsweise 0,2 bis 1,5, aufweisen können. So eignen sich auch Flüssigkeiten mit einem Volumen-Ausdehnungskoeffizienten γ in 10⁻³K⁻¹ von 0,52, z.B. Glyzerin, von 0,7 oder 0,65, z.B. Mineralöl, von 0,7, z.B. Polygkykol-Wasser-Lösung, oder Gemische derselben, z.B. bei 0°C, 18°C oder 20°C, als Druckmedium in den Stelleinrichtungen der Verspannvorrichtungen des erfindungsgemäßen Bohrwerkzeugs. Gleichfalls können in den Stelleinrichtungen auch Druckmedien in Kombination aus Feststoffen und/oder Flüssigkeiten verwendet werden. Die Flüssigkeit, die einen Volumen-Ausdehnungskoeffizienten y in 10⁻³K⁻¹: bei 18 °C von 0,5 bis 2,0, insbesondere von 0,72 bis 1,63, noch mehr bevorzugt 1,2 bis 1,5, aufweisen kann, eignet sich besonders als Druckmedium in der als Kolben-Zylinder-Einrichtung ausgestalteten Stelleinrichtung des erfindungsgemäßen Bohrwerkzeugs.

In zusätzlichen Ausgestaltungen des erfindungsgemäßen Bohrwerkzeugs eignen sich als Druckmedium auch beispielsweise Gase, z.B. Helium, Stickstoff, die sich bevorzugterweise durch einen weit höheren Volumenausdehnungskoeffizienten, auch als Volumen-Ausdehnungskoeffizienten, Volumenausdehnungskoeffizient oder isobarer Volumen-Ausdehnungskoeffizienten bezeichnet, als die vorgenannten auszeichnen. Der isobare Volumen-Ausdehnungskoeffizient, wie mit y bezeichnet, für Gase kann betragen, z.B. bei 18°C oder 20°C, 3,0 bis 4,0 x 10⁻³K⁻¹ (oder γ x 10⁻³/°C⁻¹), bevorzugterweise 3,3 bis 3,8 x 10⁻³K⁻¹ (oder γ x 10⁻³/°C⁻¹), 3,5 bis 3,7 x 10⁻³K⁻¹ (oder γ x 10⁻³/°C⁻¹), vorzugsweise 3,41 x 10⁻³K⁻¹ (oder γ x 10⁻³/°C⁻¹). So eignen sich auch Gase mit einem isobaren Volumen-Ausdehnungskoeffizienten von 3,68 x 10⁻³K⁻¹ (oder γ x 10⁻³/°C⁻¹), ganz besonders sind Stickstoff oder Helium oder Mischungen derselben, als Druckmedium in den Stelleinrichtungen der Verspannvorrichtungen des erfindungsgemäßen Bohrwerkzeugs einzusetzen. Gleichfalls können in den Stelleinrichtungen auch Druckmedien in Kombination aus Feststoffen und/oder Flüssigkeiten verwendet werden.

Ebenso sind in zusätzlichen Ausgestaltungen des erfindungsgemäßen Bohrwerkzeugs als Druckmedium herkömmliche Verbundwerkstoffe, soweit diese die für die radiale Bewegbarkeit der Spannstücke aufzubringenden Kräfte erzeugen, beispielsweise solche aus zwei oder mehr aufeinander und/oder miteinander geschichteten Materialien, z.B. mit Metalllegierungen, Schichtverbundwerkstoffen, Durchdringungsverbundwerkstoffen oder Strukturverbundwerkstoffen und / oder auch Teilchenverbundwerkstoffen oder Mischungen derselben. Mindestens in einem Bereich der dem Zylinderraum zugewandten Seite des Zylinders oder auch vollflächig ist zumindest eine mittels elektrischen Stroms betreibbare Heizeinrichtung angeordnet. Als Heizeinrichtung eignen sich beispielsweise, vorzugsweise in einem Zylinderraum angeordnete, Heizstäbe, Heizfolien, -manschette und/ oder -mäntel, welche voll- oder teilflächig gegen einen Zylinder, z.B. innenseitig und /oder außenseitig, angesetzt sein, wie umhüllen, können. Die Heizeinrichtung kann auch in dem den Feststoff als Druckmedium enthaltenden Stab angeordnet sein. Mindestens in einem Bereich der dem Zylinderraum zugewandten Seite des Zylinders oder auch vollflächig den Zylinderraum auskleidend kann zumindest eine Heizeinrichtung zum Aufheizen des Druckmediums in dem Zylinder bzw. -raum angeordnet sein. Dem Fachmann sind Heizleistungen der Heizeinrichtungen zur Temperaturbeaufschlagung wohl bekannt.

In einer weiteren Ausgestaltung des erfindungsgemäßen Bohrwerkzeugs können die Spannstücke außenseitig sägezahnförmig ausgebildet sein, um den kraftbeaufschlagten Eingriff der Spannstücke gegen bzw. in die Wandung des Bohrlochs zu erhöhen. Gegebenenfalls können auch die Spannstücke nach außen gewölbt sein, um ein Hängenbleiben derselben an der Wandung des Bohrlochs zu vermeiden.

Die Heizeinrichtungen werden über herkömmliche Leistungskabel mit elektrischer Energie angesteuert. Die elektrische Energie kann als elektrischer Strom in einer Ausgestaltung des erfindungsgemäßen Bohrwerkzeugs über als Batterien ausgebildete Energiequellen angeliefert und/oder durch induktive Kopplung mit mehreren Ladespulen erzeugt werden. Ebenso ist es möglich, dass die elektrische Energie liefernde Quelle eine mit Hilfe einer durch den Bohrfluidfluss betriebene Turbine sein kann, welche einen elektrischen Generator antreibt. Auch können in einer Ausgestaltung des erfindungsgemäßen Bohrwerkzeugs die Batterien mit der von dem Generator erzeugten elektrischen Energie aufgeladen werden, so dass das erfindungsgemäße Bohrwerkzeug ohne Eingriff von über Tage fortlaufend kostengünstig richtbohren kann.

In einer Ausgestaltung des erfindungsgemäßen Bohrwerkzeugs werden dem Schalter von der Messwertverarbeitungseinrichtung im Fall von Abweichungen die von den Sollwertvorgaben geänderten Ausgangsgrößen oder Stellgrößen der Steuervorrichtung als Signale zugeleitet, so dass der Schalter entweder einen Ein/Aus-Schalter zur Temperaturbeaufschlagung des Druckmediums oder eine Reglereinrichtung zur, vorzugsweise stufenlosen, wie maßgabengerechten, Temperaturbeaufschlagung des Druckmediums ansteuert, um in den Verspannvorrichtungen die Heizeinrichtungen derselben mit elektrischer Energie zu versorgen. Die Reglereinrichtung kann die Heizeinrichtung mit elektrischem Strom für eine vorbestimmte Zeitdauer und/oder ein Maß an elektrischem Strom, wie vorbestimmter Stromstärke, beaufschlagen, so dass vorteilhafterweise das Übergehen der Spannstücke und der Stelleinrichtungen aus der Ausgangsstellung in die Endstellung zeitlich und/der in einem bestimmten Ausmaß des Ausfahrens derselben, z.B. unter Bildung eines definierten Winkels, vorbestimmt sein kann und/oder die Spannstücke oder Stelleinrichtungen nur um ein vorbestimmtes Maß aus der Ausgangsstellung in Richtung zu der Endstellung hin ausgefahren werden können, je nach Vorgaben oder Erfordernissen des Bohrlochdurchmessers, des Gesteins, usw. bei dem Tiefbohren. Das Druckmedium kann auch in einer Ausführungsform des erfindungsgemäßen Bohrwerkzeugs mit steigender Temperatur durch die Ansteuerung der Reglereinrichtung so beaufschlagt werden, z.B. in Abhängigkeit des von einem Drucksensor in dem Zylinderraum gemessenen Drucks und/ oder in Abhängigkeit von der Zusammensetzung der Gesteinsformation, da die Reglereinrichtung der Heizeinrichtung stufenlos elektrische Energie zuführen kann, so dass das in der Kammer oder dem Zylinderraum der Verspannvorrichtung befindliche Druckmedium nach vorbestimmten Maßgaben vorteilhafterweise aufgeheizt werden kann. Unter Bohrfluid wird im Sinne der Erfindung auch Bohrspülflüssigkeit verstanden.

In dem Gehäuse oder Außengehäuse des erfindungsgemäßen Bohrwerkzeugs ist die Meißelantriebswelle drehbar gelagert. Die Drehbewegung der Meißelantriebswelle kann mittels eines an der Meißelantriebswelle gekoppelten Bohrrohrstrangs und/oder durch einen in dem Gehäuse angeordneten Antrieb erzeugt werden. So ist das aus dem Außengehäuse oder Gehäuse vorstehende Ende der Meißelantriebswelle ist an dem Drehbohrmeißel gekoppelt. So ist das andere aus dem Außengehäuse oder Gehäuse vorstehende oder in demselben befindliche Ende der Meißelantriebswelle an dem Bohrrohrstrang gekoppelt. Der Drehbohrmeißel kann, wie dem Fachmann bekannt ist, von einem hydraulischen, in dem oberen Bereich des erfindungsgemäßen Bohrwerkzeugs im Gehäuse oder Außengehäuse untergebrachten Antriebsmotor, zum Beispiel einem Moineau-Motor, gedreht werden, dessen Rotor in Antwort auf das unter Druck durch hinab fließendes Bohrfluid angetrieben wird. An dem oberen Ende der Meißelantriebswelle ist vorteilhafterweise der Bohrrohrstrang gekoppelt. In einer anderen Ausgestaltung des erfindungsgemäßen Bohrwerkzeugs ist die in dem Außengehäuse drehbar gelagerte Meißelantriebswelle mit ihrem dem Drehbohrmeißel abgewandten Ende an dem Bohrrohrstrang gekoppelt in dem oberen Bereich des erfindungsgemäßen Bohrwerkzeugs, vorzugsweise außerhalb oder innerhalb des Gehäuses oder Außengehäuses.

In dem Außengehäuse, auch Gehäuse genannt, befindet sich gleichfalls eine Steuervorrichtung zur Ansteuerung der Verspannvorrichtungen. Die Steuervorrichtung kann eine oder mehrere elektronische Messwertaufnehmereinrichtungen sowie eine oder mehrere elektronische Messwertverarbeitungseinrichtungen umfassen. Als Messwertaufnehmereinrichtungen eignen sich auch als solche zur Messung des Drucks in dem Zylinderraum der Kolben-Zylinder-Einrichtung und zur Ermittlung der jeweils an einem Spannstück wirkenden Anpresskraft. An den Ausgang der Steuervorrichtung sind auch Schalter mit ihren Eingängen angeschlossen, deren Ausgänge mit den Eingängen der Heizeinrichtung der Verspannvorrichtungen angeschlossen sein können. Die Messwertverarbeitungseinrichtungen können herkömmliche Regler mit einem oder mehreren Regelkreisen für Mehrgrößenregelung aufweisen. Die Ermittlung der Anpresskraft kann erforderlich sein, z.B. beim Durchteufen lockerer Schichten in den Gesteinsformationen. Die Messwertverarbeitungseinrichtungen eignen zudem sich zur Verarbeitung der Daten der Messwertaufnehmereinrichtungen und zur Ansteuerung der Verspannvorrichtungen mittels elektrischer Energiezuführung nach dem Alles-oder Nichts-Prinzip oder mittels stufenlos zunehmender Beaufschlagung derselben mit elektrischer Energie. Unter Daten kann im Sinne der Erfindung auch verstanden werden Mess-, Stell-, Ausgangsgrößen, Signale, Drucksignale, Schallimpulse, Steuersignale, usw.

Ebenso ist es möglich, dass die Messwertaufnehmereinrichtung Daten, wie Lagedaten, oder auch zusätzlich oder alternativ sonstige Messwerte des erfindungsgemäßen Bohrwerkzeugs erzeugen, welche in der Messwertverarbeitungseinrichtung mit vorgegebenen Sollwerten abgeglichen werden können.

Die herkömmliche Steuervorrichtung kann. wie dem Fachmann vertraut ist, eine Messwertaufnehmereinrichtung, die auch die Magnetfeldsensoren auffassen können, und/oder eine programmierbare Messwertverarbeitungseinrichtung, usw. umfassen, die miteinander verbunden sein können, zwecks Weiterleitung, Austauschs und/oder Verarbeitung von Daten, Signalen, Unter Verbindung wird im Sinne der Erfindung auch verstanden ein herkömmlicher elektrisch steuerungstechnischer Anschluss, z.B. zwischen den Magnetfeldsensoren, der Steuerverbindung, der Verspannvorrichtung, de43r Stelleinrichtung untereinander zwecks Austausch oder zumindest Weiterleitung von Daten, Messwerten oder Signalen. Im Sinne der Erfindung wird unter Steuervorrichtung auch verstanden, eine herkömmliche mit einer programmierbaren Messwertaufnehmereinrichtung, einer programmierbaren Messwertverarbeitungseinrichtung, usw. die dem Fachmann wohl vertraut sind. Die Verbindung kann sein drahtlos, mittels Draht, Ultraschall, Infrarot, Datenkommunikation mittels Bluetooth, usw. in analoger und / oder digitaler Form und / oder codiert.

Die Messwertaufnehmereinrichtungen der Steuervorrichtung des erfindungsgemäßen Bohrwerkzeugs können, wie in DE 199 50 040 beschrieben, in einer Ausbildung des erfindungsgemäßen Bohrwerkzeugs zusätzlich als Magnetfeldmesser, auch Magnetfeldsensoren genannt, zur Ermittlung von Richtungs- und Lagewerten in Abhängigkeit von dem Erdmagnetfeld und Neigungsmesser zur Ermittlung von, z.B. Neigung und Schrägbohrung, in dem Außengehäuse angeordnet sein, wobei in der Messwertverarbeitungseinrichtung zur Regelung und Steuerung der Verspannvorrichtungen ein Regelkreis für eine Mehrgrößenregelung implementiert sein kann, dem die Regelgrößenneigung und -richtung und Ausmaß derselben zugeführt werden, in welchem diese Regelgrößen mit den Sollwertvorgaben Neigung und Richtung verglichen werden können. Im Fall von Abweichungen dienen die geänderten Ausgangsgrößen oder Stellgrößen der Steuervorrichtung als Signale, die über einen Schalter in Form elektrischer Energie zum Aufheizen des Druckmediums an die Verspannvorrichtungen weitergeleitet werden können. In Regelkreisen für Mehrkreisregelung können die Messwertverarbeitungseinrichtungen der Steuervorrichtung, die üblicherweise Regler aufweist, die von den Messwertaufnehmereinrichtungen übermittelten Messgrößen als Regelgrößen mit den von Führungsgrößen festgelegten Sollwerten vergleichen und im Fall von Abweichungen der Regelgrößen von Sollwerten daraus die Stellgrößen bilden, ggf. verstärken, die die Verspannvorrichtungen oder deren z.B. Linearantriebe als Stellantriebe der Stellglieder zum Einstellen der Stellgröße erhalten können.

Die Vorgaben führen dazu, dass Verzerrungen zwischen der Neigungsmessung und der Richtungsmessung für das erfindungsgemäße Bohrwerkzeug vermieden und die Neigungsmesser und Magnetfeldmesser über den Regelkreis für die Mehrgrößenregelung so miteinander gekoppelt werden, dass die einwandfreie Kontrolle und auch Veränderung der einprogrammierten Soll-Neigung und Soll-Richtung des erfindungsgemäßen Bohrwerkzeugs vorteilhafterweise gewährleistet ist, um die Sollwertvorgabe Neigung und Richtung während des Dauerbetriebs einzuhalten. Für das fortlaufend verlaufsorientierte Bohren in großen Tiefen eignen sich Magnetfeldmesser zur Messung in drei Raumrichtungen, um solcherweise die exakte Lage des Außengehäuses und folglich die des erfindungsgemäßen Bohrwerkzeugs im Erdmagnetfeld als Referenz eindeutig zu ermitteln, und die Neigungssensoren. Die den geänderten Ausgangsgrößen der Steuervorrichtung mit Regler entsprechenden in der Messwertverarbeitungseinrichtung erzeugten Signale werden an einen Ein/Aus-Schalter weiterge-leitet, der in Ein-Stellung die Verspannvorrichtungen mit elektrischem Strom zum Aufheizen des Druckmediums zuleitet, hingegen die in Aus-Stellung die Zuleitung mit elektrischem Strom unterbricht. In Abhängigkeit von den Sollwertvorgaben Neigung und Richtung und den geänderten Ausgangsgrößen kann die durch die Verspannvorrichtung erzeugte Kraftbeaufschlagung in Ausmaß und Dauer durch die Zeitdauer der Aufheizung gesteuert werden.

In einer Ausführungsform des erfindungsgemäßen Bohrwerkzeugs sind die in dem Außengehäuse angeordneten Magnetfeld- und Neigungssensoren zur Ermittlung von Richtungswerten in Abhängigkeit vom Erdmagnetfeld angeordnet, wobei zur Regelung der Verspannvorrichtungen und deren Kolben-Zylinder-Einrichtungen ein Regelkreis für eine Mehrgrößenregelung in der Steuervorrichtung vorgesehen ist, welchem die Regelgrößen, wie Neigung und Richtung von den Neigungsmessern und den Magnetfeldmessern, als Daten, auch Messwerte oder -großen genannt, zugeführt und in der Steuervorrichtung bzw. von der Messwertverarbeitungseinrichtung derselben diese Regelgrößen mit den Sollwertvorgaben, wie Neigung und Richtung, als Sollwerte verglichen werden und bei Abweichungen die geänderten Ausgangsgrößen oder Stellgrößen von der Steuervorrichtung oder von der Messwertverarbeitungseinrichtung derselben als Signale an einen Schalter, insbesondere an einen Ein/AusSchalter zur Temperaturbeaufschlagung des Druckmediums und / oder an eine Reglereinrichtung zur stufenlosen Temperaturbeaufschlagung des Druckmediums in den Verspannvorrichtungen mittels Zuleitung elektrischer Energie weitergeleitet werden können.

Als weitere Messwertaufnehmereinrichtungen in weiteren Ausbildungen des erfindungsgemäßen Bohrwerkzeugs eignen sich herkömmliche neben Neigungssensoren und Magnetfeldsensoren auch Beschleunigungssensoren, Gammastrahlungssensoren, Gyroskop-Sensoren und/oder sonstige WOB-Sensoren zum genauen Bestimmen der Position des erfindungsgemäßen Bohrwerkzeugs zu einem bestimmten Zeitpunkt.

Durch die unmittelbare und aktive Steuerung der Verspannvorrichtungen über die in dem Außengehäuse eingebaute Steuervorrichtung entsprechen die von den Messwertaufnehmereinrichtungen angelieferten Lagedaten Echtzeit-Positionsmesswerten, während sich das erfindungsgemäße Bohrwerkzeug dreht und unter Tage in Betrieb ist. Die Messwertaufnehmereinrichtungen und die hinzugeschaltete elektronische Steuervorrichtung des erfindungsgemäßen Bohrwerkzeugs sorgen bei dem voranschreitenden Tiefbohren für die kontinuierliche Messung des Azimuts und des aktuellen Neigungswinkels, so dass sofort in Echtzeit korrektive Maßnahmen von dem erfindungsgemäßen Bohrwerkzeug mit Hilfe seiner Temperatur gesteuerten Verspannvorrichtungen vorteilhafterweise unternommen werden, ohne im Gegensatz zum Stand der Technik das Tiefbohren unterbrechen zu müssen.

Gerade die unabhängig von einem Steuerstand oder Leitzentrale über Tage stattfindende Verarbeitung der von Messwertaufnehmereinrichtungen erzeugten und weitergeleiteten Lagedaten mittels des in der Steuervorrichtung implementierten Regelkreises für Mehrgrößenregelung in die Steuervorrichtung ermöglichen auch bei geringfügigen Änderungen des Tiefbohrens das fein abgestimmte verlaufskontrollierte und geschwindigkeitskontrollierte Richtbohren des erfindungsgemäßen Bohrwerkzeugs, welche durch die Temperatur gesteuerten Verspannvorrichtungen orteilhafterweise bereitgestellt werden.

Durch die deutliche Vereinfachung der Betriebsweise, des raschen und geschickten Zusammenwirkens der Steuerung des erfindungsgemäßen Bohrwerkzeugs mit den einfach über Stelleinrichtungen zu steuernden temperaturgesteuerten Spannstücken der Verspannvorrichtungen zum Ansetzen gegen die Wandung erübrigt sich ein Eingriff von außen über einen Steuerstand über Tage bei Betrieb des erfindungsgemäßen Bohrwerkzeugs, weil in Echtzeit die Lagedaten der elektronischen Messwertaufnehmereinrichtungen noch während des Bohrens verarbeitet und nach deren Verarbeitung in der Steuervorrichtung aktiv unmittelbar fein abgestimmt die Steuervorrichtung und die einfach bedienbaren, aber leistungsfähigen temperaturgesteuerten Verspannvorrichtungen in den Bohrverlauf einzugreifen vermögen.

Nachteile des vorgenannten Stands der Technik, wie Kontrolle der Steuerung der Rückführung der Spannstücke in deren Ausgangslage, beispielsweise durch Druckbeaufschlagung, oder Überprüfung der auf die Spannstücke Kraft zu beaufschlagenden Hydrauliksysteme werden vermieden.

Ebenso spricht die Vereinfachung des Aufbaus des erfindungsgemäßen Bohrwerkzeugs im Gegensatz zu dem vorgenannten Stand der Technik durch Entfall der weiteren Steuerung der Rückführung der Spannstücke in deren Ausgangsstellung, der Überprüfung von Pumpsystemen oder Federsystemen zur Rückführung der Kolben in deren Ausgangsstellungen, und das Vermeiden des Steckenbleibens des Bohrwerkzeuges infolge nicht in Ausgangsstellung eingerasteter Spannstücke sprechen für besonders vorteilhafte Eigenschaften des erfindungsgemäßen Bohrwerkzeugs.

Das im Stand der Technik bisher ledigliche Ausfahren von Spannstücken aus der Ausgangsstellung in die Endstellung bis zum Anschlag wird zwar auch von dem erfindungsgemäßen Bohrwerkzeug und dessen Temperatur gesteuerten Spannstücken verwirklicht, jedoch können die Temperatur gesteuerten Spannstücke ebenso in vorbestimmte Stellungen ausgefahren und mit vorbestimmter Kraft beaufschlagt werden, die abhängig sind von der Zusammensetzung und der Härte des Gesteins der durchzubohrenden Erdreichformation.

Da auch die Verspannvorrichtungen mit den Spannstücken weit weniger Raumbedarf benötigen in dem Außengehäuse des erfindungsgemäßen Bohrwerkzeugs, ist es auch möglich, Verspannvorrichtungen in zwei Verspannebenen anzuordnen und diese Verspannvorrichtungen bei Betrieb abwechselnd zu benutzen, so dass die wartungsfreien Beriebszeiten für das erfindungsgemäße Bohrwerkzeug sich deutlich erhöhen im Gegensatz zum Stand der Technik. So ist es vorteilhaft, wenn die Kolben-Zylinder-Einrichtungen in zwei Verspannebenen in vertikaler Richtung fluchtend übereinander liegend oder zu denjenigen der anderen Verspannebene in Umfangsrichtung um 45° zueinander versetzt angeordnet sind.

Gleichfalls kann durch das Ansetzen der Spannstücke in zwei Versatzebenen auf einer Seite, falls erforderlich das Außengehäuse mit einer deutlich höheren Kraft beaufschlagt werden, so dass der Krümmungsgrad des verlaufsorientierten Bohrens im Gegensatz zum Stand der Technik bezüglich Neigungswinkel und Azimut zeitnaher erreicht werden kann.

Darüber hinaus können das erfindungsgemäße Bohrwerkzeug und dessen Steuervorrichtung auch über Kabel, die im Bohrrohrstrang entlanglaufen, an einen Steuerstand über Tage angeschlossen werden. Im Sinne der Erfindung wird auch unter angeschlossen ein elektrischer Anschluss zwecks Leitung elektrischer Signale und/oder elektrischen Stroms verstanden. So können die von den Messwertaufnehmereinrichtungen und/oder -verarbeitungseinrichtungen der Steuervorrichtung ermittelten Daten, insbesondere Sollwerte, Messgrößen, z.B. als Istwerte, Stellgrößen, Signale, usw., wie Lagedaten, zu dem über Tage angeordneten Steuerstand über das im Bohrrohrstrang angeordnete Kabel, weiterleitbar sein oder weitergeleitet werden. Zudem können die von den Messwertaufnehmereinrichtungen der Steuervorrichtung ermittelten Daten zu dem über Tage angeordneten Steuerstand zusätzlich oder alternativ mittels Telemetrie und/oder in Form von Drucksignalen und/ oder Impulsen, wie Schallwellen, weiterleitbar sein oder weitergeleitet werden. Ebenso kann über Kabel die Versorgung mit elektrischer Energieversorgung bereitgestellt werden. Des Weiteren kann auch umgekehrt der obertägige Steuerstand an das erfindungsgemäße Bohrwerkzeug und dessen Steuervorrichtung auch über Kabel und/oder mittels Telemetrie und/oder Drucksignalen und/ oder Impulsen, wie Schallwellen, Sollwerte oder Sollwertvorgabe, und sonstige Daten, wie Messgrößen, z.B. als Istwerte, Stellgrößen, Signale, usw., wie Lagedaten, weiterleiten.

Ebenfalls eignet sich das erfindungsgemäße Bohrwerkzeug zur Verbindung seiner Steuervorrichtung mit dem Steuerstand über Tage durch Erzeugung von Druckimpulsen, um Informationen über den in dem Bohrrohrstrang verlaufenden Spülkanal auf einfache Weise möglich zu machen, wie in DE 10 2008 063 940 offenbart. In dieser Ausgestaltung kann das erfindungsgemäße Bohrwerkzeug eine Vorrichtung zur Erzeugung von Druckimpulsen zur Übertragung von Informationen im Spülkanal des Bohrrohrstrangs aufweisen, welche an die Steuervorrichtung angeschlossen ist, welche Vorrichtung ein durch die Spülung beaufschlagtes, einen Generator mit angeschlossenem Speicher antreibendes Flügelrad umfasst, wobei der Generator einschließlich Speicher, die Kupplung und das Lager der Flügelradwelle in einem axial verlaufenden, mit Öl befüllten und gegenüber dem Bohrrohrstrang einen zylindrischen Ringspalt bildenden Gehäuse angeordnet ist und in dem Ringspalt die Spülung zum Antrieb des Flügelrades verläuft, wobei das oberhalb eines Ölspeichers im Gehäuse ein über die Spülung beaufschlagter Druckausgleichskolben vorgesehen ist und die am unteren Ende zwischen dem Gehäuse und der Flügelradwelle vorgesehene Dichtung als leichtlaufende Dichtung, z.B. als Lippen- oder Keramikdichtung, ausgebildet ist.

In einer weiteren Ausgestaltung des erfindungsgemäßen Bohrwerkzeugs können die Druckimpulse in strömenden Medien zur Übertragung von Informationen der Steuervorrichtung , insbesondere beim Herstellen von Bohrungen, im untertägigen Berg- und Tunnelbau durch den Spülkanal des Bohrrohrstrangs übertragen werden, wobei im Spülungskanal des Bohrrohrstrangs ein Laufrad angeordnet ist, das in Generator- und Motorbetrieb umschaltbar ausgebildet und entsprechend abwechselnd betreibbar ist. Hierbei kann das Laufrad mit den dem Bohrrohrstrang zugeordneten Spulen korrespondierend angebrachte Magnete aufweisen. Die Spulen können an Energiespeicher angeschlossen sein, wobei das Spulrad vorteilhafterweise axial angeordnet ist. Zudem kann das Laufrad über sich gegen die Innenwand des Spülungskanals des Bohrrohrstrangs abstützende Führungen gelagert sein wie in DE 41 34 609 offenbart.

In einer anderen Ausgestaltung des erfindungsgemäßen Bohrwerkzeugs können Informationen von der Steuervorrichtung über den Bohrrohrstrang innerhalb desselben mittels Druckimpulsen in einer strömenden Flüssigkeit, vorzugsweise Bohrspülflüssigkeit oder -fluid genannt, übertragen werden, wobei das erfindungsgemäße Bohrwerkzeug eine an die Steuervorrichtung angeschlossene Vorrichtung zur Übertragung der Informationen, insbesondere beim Herstellen von Bohrungen, mittels Drucksignalen in strömenden Flüssigkeit, vorzugsweise Bohrspülflüssigkeit, umfasst; die Vorrichtung weist eine Informationserzeugungseinrichtung, eine an die Informationserzeugungseinrichtung angeschlossene Übertragungseinrichtung zur Erzeugung der Druckimpulse in der Flüssigkeit und eine Empfangseinrichtung zum Empfangen und Auswerten der durch die Druckimpulse übertragenen Informationen im Steuerstand auf, wobei die Übertragungseinrichtung einen elastischen Strömungswiderstandskörper im Flüssigkeitsstrom und eine Stelleinrichtung zur Veränderung des Strömungsquerschnittes des Strömungswiderstandes im Takt der zu erzeugenden Druckimpulse aufweist, wie in DE 196 07 402 offenbart.

Zur Erzeugung der Druckimpulse kann die Übertragungseinrichtung einen elastischen Strömungswiderstandskörper im Flüssigkeitsstrom und eine Stelleinrichtung zur Steuerung des Strömungsquerschnittes des Strömungswiderstandskörpers im Takt der zu erzeugenden Druckimpulse aufweisen. Der Vorteil dieser Übertragung ist die kompakte und kostensparende Bauweise als auch die verschleiß- und energiearme Arbeit der Druckimpulsübertragung und trotz leichten Austausches der beweglichen Teile wird eine einwandfreie Übertragung der Information gewährleistet. Durch diese Maßnahme wird erreicht, dass im Flüssigkeitsstrom oder in dem Bohrspülflüssigkeitsstrom ein Strömungswiderstandskörper mit veränderlichem Strömungsquerschnitt sichj befindet. Durch Veränderung des Strömungsquerschnittes des Strömungswiderstandskörpers können in Fließrichtung im Bereich des Strömungswiderstandskörpers und dahinter Druckimpulse erzeugt werden, welche sie in Fließrichtung des Flüssigkeitsstromes bzw. Bohrspülflüssigkeitsstromes fortpflanzen können. Diese Druckschwankungen oder Druckimpulse lassen sich zurückführen, so dass bei verringertem Strömungsquerschnitt und gleichem Flüssigkeitsstrom die Strömungsgeschwindigkeit um den Strömungswiderstandskörper herum sich erhöht und folglich der Flüssigkeitsdruck teilweise sinkt. Eine Verkleinerung des Strömungsquerschnittes führt demzufolge zu einer teilweisen Druckerhöhung im Flüssigkeitsstrom. Hierdurch lassen sich gezielt Druckschwankungen oder Druckimpulse im Flüssigkeitsstrom erzeugen. Dies gelingt aufgrund der Elastizität des Strömungswiderstandskörpers in reproduzierbarer Weise, wobei der vorgenannte Vorgang beliebig oft und nahezu verschleißfrei wiederholt werden kann. Außerdem sind die Reaktionszeiten des elastischen Strömungswiderstandskörpers vorteilhafterweise so gering, dass einwandfreie Anstiegs- und Abfallflanken der Druckimpulse erzeugt werden können. Auf diese Weise ist eine ungestörte Informationsübermittlung nach wie vor möglich, da die erzeugten Druckimpulse eine ausreichende Flankensteilheit aufweisen, um anschließende beispielsweise digitale Auswertevorrichtungen ansteuern zu können.

Schließlich ist in einer anderen Ausführungsform des erfindungsgemäßen Bohrwerkzeugs die Steuervorrichtung des Bohrwerkzeugs an eine Vorrichtung zur Übertragung von Informationen innerhalb des Bohrrohrstrangs mittels Impulsen, wie Schallwellen, angeschlossen; an eine dem Drehbohrmeißel nachgeschaltete Informationserzeugungseinrichtung, z.B. Messwertaufnehmereinrichtungen der Steuervorrichtung, kann eine Übertragungseinrichtung zur Erzeugung der Impulse angeschlossen, wie geschaltet, sein, wobei eine Empfangseinrichtung zum Empfangen und Auswerten der über Impulse übertragenen Informationen gleichfalls die Vorrichtung umfasst, wobei die mittels Übertragungseinrichtung erzeugten Impulse als Schallwellen ausgebildet sind und an die Empfangseinrichtung weitergeleitet sind, wie in DE 10 2012 004 392 offenbart. Die Schallwellen können mittels mechanisch, hydraulisch, elektrisch und / oder pneumatisch beaufschlagbarer Impulse ausgelöst sein.

Das erfindungsgemäße Bohrwerkzeug und das erfindungsgemäße Verfahren zeichnen sich im Gegensatz zum Stand der Technik aus unter Anderem durch
fehlendes Auftreten von Restdehnung
daher auch keine von Anzahl der Übergänge abhängige Zunahme an Restdehnungen,
kein Entfall der Ausrichtbarkeit und der Steuerbarkeit der Verspannvorrichtungen,
kein kostenträchtiges Herausziehen, Ersetzen und Wiedereinfahren wegen defekter Spannstücke,
dauernde Ansteuerbarkeit der Verspannvorrichtungen,
Entfall der zusätzlichen Überwachung der Schwenkung der Spannstücke,
niedrige Wartungskosten bei dem Dauerbetrieb des Abteufens,
stufenlose Einstellbarkeit der Spannstücke nach Maßgabe von Neigung und / oder Azimut,
kraftbeaufschlagter Übergang der Spannstücke aus der Endstellung in die Ausgangsstellung,
keine Kompliziertheit des Aufbaus.

### Ausführungsbeispiele

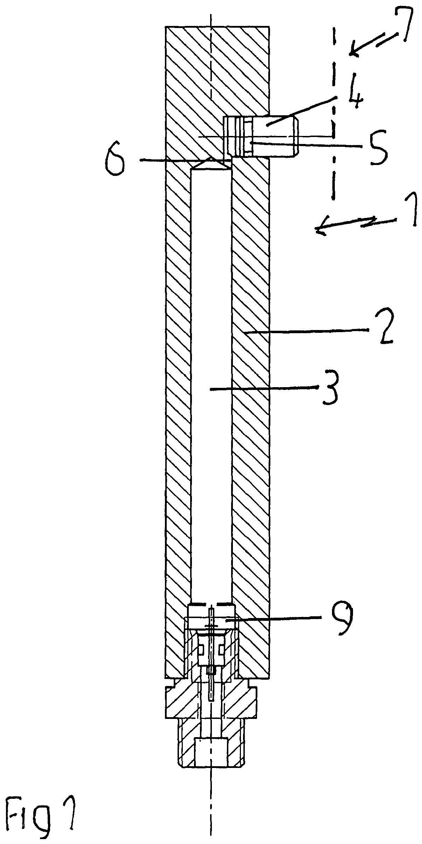

Die Zeichnung zeigt aufgrund einer zeichnerischen Vereinfachung in schematischer, stark vergrößerter Weise, ohne Anspruch auf eine maßstabsgetreue Wiedergabe in
Fig. 1 einen Querschnitt durch eine Verspannvorrichtung des erfindungsgemäßen Bohrwerkzeugs mit einer Kolben-Zylinder-Einrichtung mit einem in Ausgangsstellung angeordneten Kolben.

Die Verspannvorrichtung umfasst eine Kolben-Zylinder-Einrichtung 1 als Stelleinrichtung, Die Verspannvorrichtung ist in einem Gehäuse oder Außengehäuse des erfindungsgemäßen Bohrwerkszeugs angeordnet und abgestützt (nicht gezeigt). Ein Kolben 4 der Kolben-Zylinder-Einrichtung 1 befindet sich in seiner Ausgangsstellung in einem Zylinderraum 5. Der Zylinderraum 5 erstreckt sich quer zu der Mitte-Längsachse der Kolben-Zylinder-Einrichtung 1. Der Zylinderraum 5 ist druckmediumdurchgängig über einen Kanal 6 mit einer Kammer 3 eines Kammergehäuses 2, in welcher das Druckmedium aufgeheizt und abgekühlt werden kann, verbunden.

An dem unteren dem Zylinderraum 5 abgewandten Ende der Kammer 3 befindet sich eine Heizeinrichtung 9; die Heizeinrichtung 9 ist an zumindest einem Teil der Innen- und / oder Außenwänden des Kammergehäuses 2 zum Aufheizen desselben angeordnet. Die Heizeinrichtung der Verspannvorrichtung ist eingangsseitig an den Ausgang eines Ein/Aus-Schalters angeschlossen. der von der Steuervorrichtung angesteuert ist. In Ein-Stellung des Ein/Aus-Schalters wird die Heizeinrichtung mit elektrischer Energie, die mittels eines in dem Gehäuse angeordneten elektrischen Stroms erzeugenden Generator angeliefert wird, beaufschlagt zum Aufheizen des Druckmediums. In einem anderen Ausführungsbeispiel wird die Heizeinrichtungen 9 über Leistungskabel mit dem über den Ein/Aus-Schalter elektrischen Strom aus Batterien und/oder von einem von einer von einem Bohrfluidstrom angetriebenen Turbine getriebenen elektrischen Generator über die Steuervorrichtung zur Erhitzung von Druckmedien versorgt und über den Ein/Aus-Schalter angesteuert. In Aus-Stellung des Ein/Aus-Schalters wird die Heizeinrichtung nicht mit elektrischen Strom beaufschlagt. An dem oberen dem Zylinderraum 5 zugewandten Ende der Kammer 3 ist der Kanal 6 angeordnet, der die Kammer 3 des Kammergehäuses 2 mit dem Zylinderraum 5 druckmediumdurchgängig verbindet. In dem Zylinderraum 5 ist der Kolben 4 betreibbar. Die Kammer 3 und der Zylinderraum 5 sind mit einem Ölgemisch als Druckmedium befüllt, welches einen Temperaturausdehnungskoeffizienten, wie Volumen-Ausdehnungskoeffizienten, γ bei 18 °C von 5,0 x 10⁻⁴oder in anderen Ausführungsbeispielen von 16,0 x 10⁻⁴oder 18 x 10⁻⁴ (in 1/K bzw. 1/° C), oder welches einen Volumen-Ausdehnungskoeffizienten, γ bei 18 °C von 0,52 (γ in 10⁻³K⁻¹), Glyzerin enthaltend, aufweist. In weiteren Ausführungsbeispielen wird als Druckmedium Helium oder Stickstoff verwendet.

Infolge Temperaturbeaufschlagung des Druckmediums bereits auf 125°C, 150°C, 175°C, 210°C oder 255°C oder höher als die vorgenannten Temperaturen wird das Druckmedium soweit ausgedehnt, dass der Kolben 4 in dem Zylinderraum 5 nach außen aus seiner Ausgangstellung in die Endstellung (nicht gezeigt) getrieben wird. Das eine Außenende des Kolbens 4 ist an das Spannstück 7, vorzugsweise gelenkig, gekoppelt, so dass infolge des Austriebs des Kolbens 4 bei seinem Übergang von seiner Ausgangs- in seine Endstellung gleichfalls das Spannstück 7 nach außen geschwenkt wird, um gegen die Bohrlochwandung (nicht gezeigt) kraftbeaufschlagt angesetzt werden. Der vor der Druckmediumerhitzung in Ausgangsstellung befindliche Kolben 4 wird infolge der Erhitzung des Druckmediums radial zu der Mitte-Längsachse des Gehäuses oder zu der der Meißelantriebswelle, wie quer zu der Mitte-Längsachse, zum kraftbeaufschlagten Ansetzen des Spannstücks 7 gegen eine Bohrlochwandung bei Übergang von der Ausgangstellung in die Endstellung in dem Zylinderraum 5 nach außen in Richtung zu der Bohrlochwandung hin bewegt, wie verschoben. Infolge der Erkaltung oder Abkühlung des Druckmediums wird der in Endstellung befindliche Kolben 4 in die Gegenrichtung, nunmehr in die Richtung zu der Mitte-Längsachse des Gehäuses oder der Meißelantriebswelle hin, radial zu der Mitte-Längsachse des Gehäuses oder der der Meißelantriebswelle zum Ansetzen des Spannstücks 7 an das Gehäuse bzw. an dessen Außenseite bei dem Übergang von der Endstellung in die Ausgangsstellung verschoben.

Das Spannstück 7 ist mit seinem anderen dem Drehbohrmeißel abgewandten Ende an dem Außengehäuse über eine Feder, wie Schrauben- oder Tellerfeder, , vorzugsweise gelenkig, gekoppelt, wobei die Führung des anderen Endes des Spannstücks 7 durch einen entlang eines radial zu dem dem Außengehäuse ausgerichteten und mit an diesem gekoppelten stabförmigen Zapfen (nicht gezeigt) Parallelverschiebungen des Spannstücks 7 zu dem Außengehäuse oder zu der Mitte-Längsachse desselben oder zu der Meißelantriebswelle wirkungsvoll unterstützt. Bei dem Austrieb des Kolbens 4 infolge Hitzebeaufschlagung der Kammer 3 und /oder des Zylinderraums 5 wird das Spannstück 7 radial zu der Mitte-Längsachse des Außengehäuses oder der Meißelantriebswelle nach außen und parallel zu der Mitte-Längsachse des Außengehäuses oder der Meißelantriebswelle nach außen aus seiner Ausgangsstellung in die Entstellung gefahren.

Das kraftbeaufschlagte Ansetzen kann je nach Erfordernis von der Maßgabe einer Zeitdauer abhängig sein, ohne dass im Gegensatz zum herkömmlichen Stand der Technik eine mechanische Mehrbelastung, beispielsweise bei Pumpenbetrieb, zu beobachten ist. Aus der Endstellung kann das Spannstück 7 wie auch der Kolben 4 infolge Erkaltens bzw. Unterbrechens des Heizvorgangs der Heizeinrichtung 9 zurückgefahren werden in deren jeweilige Ausgangsstellungen. Das vielfache Ein- und Ausfahren von Kolben 4 und Spannstück 7 ist verschleißarm, da lediglich der Kolben 4 in dem Zylinderraum 5 bewegt wird im Gegensatz zum Stand der Technik, der ein Mehrfaches an mechanisch beweglichen Teilen erforderlich macht, um nicht nur die zeitdauerabhängige Kraftbeaufschlagung, sondern auch ein Zurückfahren der Bauteile nach Beendigung der Kraftbeaufschlagung möglich zu machen. Die Heizeinrichtung kann sich in der Kammer 3 befinden und/oder im Bereich des Zylinderraums 5 angeordnet sein.

In einem anderen, der Erfindung nicht gehörenden, Ausführungsbeispiel (nicht gezeigt) ist die Verspannvorrichtung mit einer Stelleinrichtung ausgebildet, die als Stab mit einem infolge Hitze ausdehnbaren Material. oder auch Feststoff oder festen Stoff genannt, als Druckmedium, das eine Aluminiumlegierung, z.B. mit Längen-Ausdehnungskoeffizienten α in 10⁻⁶K⁻¹ von 23,1 bei 20°C, sein kann, ausgebildet ist, wobei der Stab gleichfalls mit einer Heizeinrichtung versehen, wie ummantelt, ist. Infolge der Erhitzung des Materials des Stabs erfolgt eine beträchtliche Längenausdehnung des Materials, so dass die Längenausdehnung des Materials gleichfalls das an den Stab gekoppelte Spannstück 7 nach außen zum kraftbeaufschlagten Ansetzen gegen die Bohrlochwandung aus der Ausgangsstellung in die Endstellung treibt oder hinbewegt.

Zudem kann in einem zusätzlichen Ausführungsbeispiel der Verspannvorrichtung mit dem Stab mit Feststoff nicht nur die Zeitdauer der Hitzebeaufschlagung des Stabes sondern auch das Ausmaß der Temperaturbeaufschlagung des Stabes mit Hilfe einer Reglereinrichtung, deren Eingang an den Ausgang der Steuervorrichtung angeschlossen ist, gesteuert werden, je nach Erfordernis der Gesteinsformation untertägig und des Maßes des zu beschreibenden Krümmungsverlaufs des Bohrlochs (nicht gezeigt).

In einem zusätzlichen Ausführungsbeispiel (nicht gezeigt) ist die Verspannvorrichtung mit einer Stelleinrichtung ausgebildet, die zwei voneinander beabstandete einander parallel ausgerichtete Stäbe mit dem infolge Hitze ausdehnbaren Material als Druckmedium, z.B. Aluminiumlegierung, z.B. mit Längen-Ausdehnungskoeffizienten α in 10⁻⁶K⁻¹ von 23,1 bei 20°C, aufweist, deren Außenenden an dem Spannstück 7 zwecks dessen Parallelverschiebung infolge Temperaturbeaufschlagung des Druckmediums gekoppelt sind; unter Temperaurbeaufschlagung kann im Sinne der Erfindung auch die Beaufschlagung des Druckmedium mit einer niedrigen Temperatur zwecks Abkühlung desselben und die Beaufschlagung des Druckmediums zwecks Aufheizung desselben auch verstanden werden.

In einem weiteren Ausführungsbeispiel (nicht gezeigt) kann die Kammer gleichfalls mit zwei je einen Kolben 4 aufweisenden Zylinderräumen 5 verbunden sein, so dass die beiden Kolben 4 der Zylinderräume 5 ein Spannstück 7 parallel zu der Mitte-Längsachse des Außengehäuses aus der Ausgangsstellung in die Endstellung gegen die Bohrlochwandung und wieder zurück bewegen können, ohne dass es eines Mehraufwandes an mechanischen Teilen im Gegensatz zum Stand der Technik bedarf. Die Zylinderräume 5 sind über einen Kanal 6 mit einer Kammer 3 druckmediumdurchgängig verbunden, welche eine Heizeinrichtung 9 aufweist, deren Eingang mit dem Ausgang eines Ein/Aus-Schalters angeschlossen ist. der von der Steuervorrichtung angesteuert ist. Auch können mit in dem Zylinderraum 5 oder Kammer 3 angeordneten Messwertaufnehmern der Anpressdruck, mit welchem das Spannstück 7 gegen die Wandung des Bohrlochs kraftbeaufschlagt angesetzt wird, bestimmt und fortwährend kontrolliert werden, so dass auch diese Steuerung in Echtzeit erfolgt, ohne dass es eines Eingriffs von außen bedarf.

In einem anderen Ausführungsbeispiel (nicht gezeigt) ist die Kolben-Zylinder-Einrichtung 1 als doppeltwirkende ausgebildet ist, deren gegenüberliegende Kolbenflächen mit über die in den beiden gegenüberliegenden Zylinderräumen 5 angeordneten Heizeinrichtungen temperaturgesteuerten Druckmedien beaufschlagbar sind; auch können in einer Weiterentwicklung des Ausführungsbeispiels jedes der beiden Zylinderräumen 5 mit jeweils einer Kammer 3 eines Kammergehäuses 2 über einen Kanal 6 druckmediumdurchgängig verbunden sein; jede Kammer 3 weist eine Heizeinrichtung auf, so dass die Druckmedien außerhalb der, vorzugsweise keine Heizeinrichtungen aufweisenden, Zylinderräume 5 nur in den, ggf. von den Zylinderräumen 5 beabstandeten, Kammern 3 erhitzt werden können. Infolge Erhitzung des Druckmediums in dem einen Zylinderraum 5 und/oder in der einen Kammer 3 werden der Kolben 4 und das an ihn gekoppelte Spannstück 7 aus der Ausgangs- in die Endstellung bewegt, wobei das andere Druckmedium in dem anderen Zylinderraum 5 und der anderen Kammer keine Erhitzung erfährt, bevorzugterweise abgekühlt ist; infolge Erhitzung des anderen Druckmediums in dem anderen Zylinderraum 5 und/oder der anderen Kammer 3 werden der Kolben 4 und das an ihn gekoppelte Spannstück 7 aus der End- in die Ausgangsstellung getrieben, wobei das eine Druckmedium in dem einen Zylinderraum 5 und/oder der einen Kammer 3 keine Erhitzung erfährt, vorteilhafterweise abgekühlt ist. Dieses Ausführungsbeispiel eignet sich auch zu einem vorbestimmten, wie nur teilweisen, Aus- und Eintreiben des Kolbens 4; nur ein Teil des Kolbens 4 aus dem Zylinderraum 5 wird ausgetrieben und/oder in diesen zurückbewegt, ohne dass der Kolben 4 und das an ihn gekoppelte Spannstück 7 in die Endstellung gelangen.

Der robuster Aufbau durch die Verwendung der temperaturgesteuerten Verspannvorrichtung des erfindungsgemäßen Bohrwerkzeugs sorgt für
die Wartungsarmut,
den fortlaufenden Richtbohrbetrieb,
die stete Steuerung in Echtzeit,
den Dauerbetrieb,
den fein kontrollierten, auch geringfügigen Krümmungsverlauf der Tiefbohrung,
die Berücksichtigung vielfältiger Lagedaten und sonstiger Messwerte mit deren Verarbeitung mittels in der Steuervorrichtung implementierter Regelkreise für Mehrgrößenregelung,
die Übertragung von Informationen über Druckimpulse ohne Kabel im Bohrrohrstrang,
das fortlaufend verlaufsorientierte Bohren in großen Tiefen,
die Vergrößerung der Zeiträume zwischen den Wartungen des erfindungsgemäßen Bohrwerkzeugs,
das kostensparende Richtbohren,
die starke Steigerung der wartungsfreien Dauer des Betriebs des erfindungsgemäßen Bohrwerkzeugs,
die offensichtliche Verringerung von Ersatzmaterial und -bauteilen,
die deutliche Senkung der Betriebskosten,
die kompakte und kostensparende Bauweise des erfindungsgemäßen Bohrwerkzeugs,
die verschleiß- und energiearme Arbeit der Datenübertragung,
das einwandfreie Übertragen der Daten,
automatische Korrektur der Abweichungen der Bohrung von der vorgegebenen Bohrrichtung
bei gleichzeitiger Kontrolle des Bohrverlaufs.

## Patentansprüche

1. Bohrwerkzeug für den störungsfreien Dauerbetrieb zum Abteufen von Bohrungen in unterirdischen Gesteinsformationen unter Vorgabe eines wählbaren Richtungsverlaufes für das Bohrloch mit
einem rohrförmigen Gehäuse,
einer in dem Gehäuse umlaufenden, auf ihrem unteren aus dem Gehäuse vorstehenden Ende einen Drehbohrmeißel tragenden Meißelantriebswelle,
mehreren in dem Gehäuse angeordneten elektrisch betreibbaren Verspannvorrichtungen zur Erzeugung von Richtkräften mit radial ausrichtbaren Kraftkomponenten für das Ausrichten des Bohrwerkzeugs bei Bohrbetrieb
und
einer Steuervorrichtung für die Ansteuerung der Verspannvorrichtungen,
wobei
die Verspannvorrichtungen Stelleinrichtungen aufweisen, an die radial auswärts und einwärts bewegbare, schildartige in Nuten des Gehäuses einlassbare, über den Umfang verteilt im Gehäuse zumindest auf einer Verspannebene angeordnete Spannstücke (7) gekoppelt sind,
deren Bewegbarkeit mittels der mindestens ein durch Hitze ausdehnbares Druckmedium aufweisenden Stelleinrichtungen temperaturgesteuert ist, **dadurch gekennzeichnet, dass**
das Druckmedium eine Flüssigkeit oder ein Gas ist, wobei
die Flüssigkeit einen Volumen-Ausdehnungskoeffizienten γ bei 18°C von 5,0 bis 20,0 x 10⁻⁴K⁻¹ aufweist,
das Gas einen isobaren Volumen-Ausdehnungskoeffizienten γ bei 18°C von 3,0 bis 4,0 x 10⁻⁴K⁻¹ aufweist.

2. Bohrwerkzeug nach Anspruch 1, **dadurch gekennzeichnet, dass** an den Stelleinrichtungen die Spannstücke (7) gelenkig gekoppelt sind, wobei die Stelleinrichtung als eine Kolben-Zylinder-Einrichtung (1) ausgebildet ist, eine Heizeinrichtung (9) sich in einer Kammer (3) befindet und/ oder im Bereich des Zylinderraums (5) zum Aufheizen des Druckmediums angeordnet ist, der Kolben (4) mit seinem Außenende an dem Spannstück (7) gekoppelt ist, der Zylinderraum (5) mit der Flüssigkeit oder dem Gas als Druckmedium befüllt ist.

3. Bohrwerkzeug nach Anspruch 1 oder 2, **dadurch gekennzeichnet, dass** an den Stelleinrichtungen die Spannstücke (7) gelenkig gekoppelt sind, wobei die Stelleinrichtung als eine Kolben-Zylinder-Einrichtung (1) ausgebildet ist, deren Zylinderraum (5) druckmediumdurchgängig mit einer Kammer (3) eines Kammergehäuses (2) verbunden ist, der Zylinderraum (5) und die Kammer (3) mit der Flüssigkeit oder dem Gas als Druckmedium befüllt sind, eine Heizeinrichtung (9) an zumindest einem Teil der Innen- und/ oder Außenwände des Kammergehäuses (2) zum Aufheizen desselben und des Druckmediums angeordnet ist, der Zylinderraum (5) der Kolben-Zylinder-Einrichtung (1) eine Heizeinrichtung (9) zum Aufheizen des Druckmediums aufweist, der Kolben (4) mit seinem Außenende an dem Spannstück (7) gekoppelt ist.

4. Bohrwerkzeug nach Anspruch 2 oder 3, **dadurch gekennzeichnet, dass** der Kolben (4) infolge Erhitzung des Druckmediums radial zu der Mitte-Längsachse des Gehäuses zum kraftbeaufschlagten Ansetzen des Spannstücks (7) gegen eine Bohrlochwandung bei Übergang von der Ausgangsstellung in die Endstellung verschoben ist.

5. Bohrwerkzeug nach einem der Ansprüche 2 bis 4, **dadurch gekennzeichnet, dass** der Kolben (4) infolge Erkaltung des Druckmediums radial zu der Mitte-Längsachse des Gehäuses zum Ansetzen des Spannstücks (7) an dasselbe bei Übergang von der Endstellung in die Ausgangsstellung verschoben ist.

6. Bohrwerkzeug nach einem der Ansprüche 2 bis 5, **dadurch gekennzeichnet, dass** die Heizeinrichtung (9) über Leitungskabel mit elektrischem Strom aus Batterien und/ oder von einem oder einer von einem Bohrfluidstrom angetriebenen Turbine angetriebenen elektrischen Generator über die Steuervorrichtung zur Erhitzung von Druckmedien ansteuerbar sind.

7. Bohrwerkzeug nach einem der vorhergehenden Ansprüche, **dadurch gekennzeichnet, dass** die Flüssigkeit als Druckmedium einen Volumen-Ausdehnungskoeffizienten γ bei 18°C von 7,2 bis 16,3 x 10⁻⁴ K⁻¹, noch mehr bevorzugt 12 bis 15 x 10⁻⁴ K⁻¹ aufweist.

8. Bohrwerkzeug nach einem der vorhergehenden Ansprüche, **dadurch gekennzeichnet, dass** die Stelleinrichtung als ein Linearantrieb ausgebildet ist, der mindestens einen aus dem Feststoff ausgebildeten Stab aufweist, an dessen Außenende das Spannstück (7) gekoppelt ist.

9. Bohrwerkzeug nach einem der Ansprüche 2 bis 8, **dadurch gekennzeichnet, dass** die Kolben-Zylinder-Einrichtung (1) als doppeltwirkende ausgebildet ist, deren gegenüberliegende Kolbenflächen mit temperaturgesteuerten Druckmedien beaufschlagbar sind.

10. Bohrwerkzeug nach mindestens einem der vorhergehenden Ansprüche, **dadurch gekennzeichnet, dass** die von Messwertaufnehmereinrichtungen der Steuervorrichtung ermittelten Daten, insbesondere Lagedaten, zu einem über Tage angeordneten Steuerstand über ein im Bohrstrang angeordnetes Kabel, Telemetrie und/ oder in Form von Drucksignalen weiterleitbar sind;
wobei optional das Bohrwerkzeug eine Vorrichtung zur Erzeugung von Drucksignalen zur Übertragung der Informationen in einem Spülkanal des Bohrrohrstrangs mittels eines durch die Spülung beaufschlagten, einen Generator mit angeschlossenem Speicher antreibenden Flügelrad umfasst, der Generator einschließlich Speicher, die Kupplung und das Lager der Flügelradwelle in einem axial verlaufenden, mit Öl befüllten und gegenüber dem Bohrrohrstrang einen zylindrischen Ringspalt bildenden Gehäuse angeordnet sind und in dem Ringspalt die Spülung zum Antrieb des Flügelrades verläuft, oberhalb eines Ölspeichers im Gehäuse ein über die Spülung beaufschlagter Druckausgleichskolben vorgesehen ist und die am unteren Ende zwischen dem Gehäuse und der Flügelradwelle vorgesehene Dichtung als leichtlaufende Dichtung, z.B. als Lippen- oder Keramikdichtung, ausgebildet ist; und
optional, das Bohrwerkzeug eine Vorrichtung zur Erzeugung von Drucksignalen in strömenden Medien zur Übertragung von Informationen, insbesondere beim Herstellen von Bohrungen in einem untertägigen Berg- und Tunnelbau, durch einen Spülungskanal des Bohrrohres umfasst, wobei in dem Spülungskanal des Bohrrohrstrangs ein Laufrad angeordnet ist, das in Generator- und Motorbetrieb umschaltbar ausgebildet und entsprechend abwechselnd betreibbar ist.

11. Bohrwerkzeug nach Anspruch 10, **dadurch gekennzeichnet, dass** die von den Messwertaufnehmereinrichtungen der Steuervorrichtung ermittelten Daten, wie Lagedaten, zu einem über Tage angeordneten Steuerstand in Form von Drucksignalen weiterleitbar sind, das Bohrwerkzeug eine Vorrichtung zur Übertragung der Informationen, insbesondere beim Herstellen von Bohrungen, mittels Druckimpulsen in einer strömenden Flüssigkeit, vorzugsweise Bohrspülflüssigkeit, umfasst mit einer Informationserzeugungsvorrichtung, einer an die Informationserzeugungsvorrichtung angeschlossenen Übertragungseinrichtung zur Erzeugung der Druckimpulse in der Flüssigkeit und einer Empfangseinrichtung zum Empfangen und Auswerten der durch die Druckimpulse übertragenen Informationen im Steuerstand, wobei die Übertragungseinrichtung einen elastischen Strömungswiderstandskörper im Flüssigkeitsstrom und eine Stelleinrichtung zur Veränderung des Strömungsquerschnittes des Strömungswiderstandes im Takt der zu erzeugenden Druckimpulse aufweist.

12. Bohrwerkzeug nach einem der Ansprüche 10 bis 11, **dadurch gekennzeichnet, dass** die von den Messwertaufnehmereinrichtungen der Steuervorrichtung ermittelten Daten, wie Lagedaten, zu einem über Tage angeordneten Steuerstand in Form von Drucksignalen weiterleitbar sind, wobei die Steuervorrichtung des Bohrwerkzeugs an eine Vorrichtung zur Übertragung der Informationen innerhalb des Bohrrohrstrangs mittels Impulsen, wie Schallwellen, angeschlossen ist; wobei an die Messwertaufnehmereinrichtungen der Steuervorrichtung eine Übertragungseinrichtung zur Erzeugung der Impulse geschaltet ist, die Vorrichtung eine Empfangseinrichtung zum Empfangen und Auswerten der über Impulse übertragenen Informationen umfasst, die mittels Übertragungseinrichtung erzeugten Impulse als Schallwellen ausgebildet sind und an die Empfangseinrichtung weitergeleitet sind.

13. Bohrwerkzeug nach einem der vorhergehenden Ansprüche, **dadurch gekennzeichnet, dass** ein oberes Ende der Meißelantriebswelle an einem Bohrrohrstrang koppelbar ist.

14. Bohrwerkzeug nach einem der vorhergehenden Ansprüche, **dadurch gekennzeichnet, dass** der Zylinderraum (5) druckmediumdurchgängig über einen Kanal (6) mit der Kammer (3) des Kammergehäuses (2), in welcher das Druckmedium aufgeheizt und abgekühlt werden kann, verbunden ist.

15. Verfahren zum verlaufskontrollierten Richtbohren in tiefen Erdschichten unter Verwendung des Bohrwerkzeugs für den störungsfreien Dauerbetrieb zum Abteufen von Bohrungen in unterirdischen Gesteinsformationen nach mindestens einem der vorhergehenden Ansprüche, wobei
die von Messwertaufnehmereinrichtungen einer Steuervorrichtung festgestellten Daten, insbesondere Lagedaten, an die elektronische Messwertverarbeitungseinrichtung der Steuervorrichtung weitergeleitet werden, wobei
die Daten in der Messwertverarbeitungseinrichtung der Steuervorrichtung einem Regelkreis für die Mehrgrößenregelung zugeführt werden,
in der Messwertverarbeitungseinrichtung die Daten als Regelgrößen mit in der Messwertverarbeitungseinrichtung gespeicherten Sollvorgaben oder Sollwerten verglichen werden,
im Fall von Abweichungen von Sollwertvorgaben oder Sollwerten geänderte Ausgangsgrößen von der Steuervorrichtung als Signale an eine Schalter, insbesondere an einen Ein/Aus-Schalter, zur Temperaturbeaufschlagung des Druckmediums oder an eine Regeleinrichtung zur stufenlosen maßgabengerechten Temperaturbeaufschlagung des Druckmediums in den Verspannvorrichtungen mittels Zuleitung elektrischer Energie zu Heizeinrichtungen weitergeleitet werden.

## Claims

1. A drilling tool for trouble-free continuous operation for sinking bores into underground rock formations, with specification of a selectable directional path for the wellbore, having
a tubular housing,
a bit drive shaft rotating in the housing and bearing at its lower a rotary drilling bit which protrudes from the housing,
a plurality of electrically powered bracing devices arranged in the housing for generating directing forces having radially alignable force components for the alignment of the drilling tool during drilling operations
and
a control device for actuating the bracing devices, wherein
the bracing devices having actuating devices to which anchoring elements (7) are coupled which are arranged along at least one bracing plane and distributed over the circumference of the housing, and which are movable radially outwardly and inwardly and can be retracted shield-like into grooves in the housing,
the mobility of said bracing devices being temperature-controlled by means of the actuating devices containing at least one heat-expandable pressure medium, **characterized in that**
the pressure medium is a liquid or a gas, wherein
the liquid has a coefficient of volume expansion γ of 5.0 to 20.0 x 10-4 K-1 at 18° C,
the gas has an isobaric coefficient of volume expansion γ of 3.0 to 4.0 x 10-4 K-1 at 18° C.

2. The drilling tool according to claim 1, **characterized in that** the anchoring elements (7) are articulated to the actuating devices, wherein the actuating device is configured as a piston-cylinder assembly (1), a heating means (9) is present in the chamber (3) and/or is arranged in the region of the cylinder space (5) for heating the pressure medium, the outer end of the piston (4) is coupled to the anchoring element (7), and the cylinder space (5) is filled with the liquid or the gas as the pressure medium.

3. The drilling tool according to claim 1 or 2, **characterized in that** the anchoring elements (7) are articulated to the actuating devices, wherein the actuating device is configured as a piston-cylinder assembly (1), the cylinder space (5) of which is connected to a chamber (3) of a chamber housing (2) so as to allow the passage of pressure medium, the cylinder space (5) and the chamber (3) are filled with the liquid or the gas as a pressure medium, a heating means (9) is arranged on at least a part of the inner and/or outer walls of the chamber housing (2) for the purpose of heating the housing and the pressure medium, the cylinder space (5) of the piston-cylinder assembly (1) has a heating means (9) for heating the pressure medium, and the outer end of the piston (4) is coupled to the anchoring element (7).

4. The drilling tool according to claim 2 or 3, **characterized in that** due to the pressure medium being heated, the piston (4) is displaced radially to the longitudinal center axis of the housing for the force-loaded placement of the anchoring element (7) against a wellbore wall during the transition of said anchoring element from the home position to the end position.

5. The drilling tool according to any of claims 2 to 4, **characterized in that** due to the pressure medium being cooled, the piston (4) is displaced radially to the longitudinal center axis of the housing for placement of the anchoring element (7) on the same during the transition of said anchoring element from the end position to the home position.

6. The drilling tool according to any of claims 2 to 5, **characterized in that** the heating means (9) can be actuated by the control device via cables with electric current supplied from batteries and/or by an electric generator which is driven by a turbine driven by a flow of drilling fluid, for the purpose of heating the pressure media.

7. The drilling tool according to any of the previous claims, **characterized in that** the liquid has a coefficient of volume expansion γ of 7.2 to 16.3 x 10-4 K-1 at 18° C, even more preferably of 12 to 15 x 10-4 K-1 as a pressure medium.

8. The drilling tool according to any of the preceding claims, **characterized in that** the actuating device is configured as a linear drive which has at least one rod formed from the solid, to whose outer end the anchoring element (7) is coupled.

9. The drilling tool according to any of claims 2 to 8, **characterized in that** the piston-cylinder assembly (1) is configured as dual-action, whose opposing piston surfaces can be acted on by temperature-controlled pressure media.

10. The drilling tool according to at least one of the preceding claims, **characterized in that** the data, in particular position data, established by the measurement capturing devices of the control device, are relayable to a control station arranged above surface via a cable arranged in the drill pipe string, telemetry and/or in the form of pressure signals; wherein optionally the drilling tool comprises an apparatus for generating pressure signals for transmitting the information in a purge channel of the drill pipe string by means of an impeller, which is acted on by the drilling liquid and which drives a generator having an accumulator attached, the generator including accumulator, the coupling and the bearing of the impeller shaft are arranged in an axially extending housing filled with oil and forming a cylindrical annular gap in relation to the drill pipe string, and the purging for driving the impeller extends into the annular gap, above an oil storage in the housing a pressure compensation piston subjected to the purging is provided and the seal provided at the lower end between the housing and the impeller shaft is configured as a smooth-running seal, e.g. a lip seal or a ceramic seal; and optionally the drilling tool comprises an apparatus for generating pressure signals in flowing media for transmitting the information items, in particular upon creating drill holes in an underground mining and tunneling, by a purging channel of the drill casing, wherein in the purging channel of the drill pipe string, an impeller is arranged which is configured switchable to generator operation and motor operation and is accordingly alternately operable.

11. The drilling tool according to claim 10, **characterized in that** the data, such as position data, established by the measurement capturing devices of the control device, can be forwarded in the form of pressure signals to a control station arranged above ground, the drilling tool comprises an apparatus for transmitting the information items, in particular upon manufacturing bores, by means of pressure pulses in a flowing liquid, preferably drilling purge fluid, with an information item generation apparatus, a transmission device attached in the information item generation apparatus for generating the pressure pulses in the liquid and a receiving device for receiving and evaluating the information items transferred by the pressure pulses in the control station, wherein the transmission device has an elastic flow resistance body in the liquid stream and an actuating device for changing the flow cross section of the flow resistance body in time with the pressure pulses to be generated.

12. The drilling tool according to any of claims 10 to 11, **characterized in that** the data, such as position data, established by the measurement capturing devices of the control device, are relayable in the form of pressure signals to a control station arranged above ground, wherein the control device of the drilling tool is connected to an apparatus for transmitting the information items within the drill pipe string by means of pulses, such as sound waves; wherein to the measurement capturing devices of the control device to a transmission device for generating the pulses is connected, the apparatus comprises a receiving device for receiving and analyzing the information transmitted via pulses, and the pulses generated by the transmitting device are configured as sound waves and are forwarded to the receiving device.

13. The drilling tool according to any of the preceding claims, **characterized in that** the upper end of the bit drive shaft can be coupled to a drill pipe string.

14. The method according to either of the preceding claims, **characterized in that** the cylinder space (5) is connected, so as to allow the passage of pressure medium, via a channel (6) to a chamber (3) of the chamber housing (2) in which the pressure medium can be heated and cooled.

15. A method for path-controlled directional drilling in deep underground layers using the drilling tool for trouble-free continuous operation for sinking bores into underground rock formations, according to at least one of the preceding claims, wherein
the data, in particular position data, ascertained by measurement capturing devices of a control device are forwarded to the electronic measurement processing device of the control device, wherein
in the measurement processing device of the control device, the data are fed to a control loop for multivariable control, in the measurement processing device, the data are compared as control variables with target specifications or target values stored in the measurement processing device,
in the event of deviations from the target value specifications or target values, modified output variables are relayed by the control device as signals to a switch, in particular to an on/ off switch, for applying a temperature to the pressure medium, or to a regulator for the continuously variable application of temperature, according to specifications, to the pressure medium in the bracing devices by supplying electric power to heating means.

## Revendications

1. Outil de forage pour un fonctionnement permanent sans perturbations pour le creusement de forages dans des formations rocheuses souterraines selon un tracé de direction sélectionnable pour le puits avec
un carter tubulaire,
un arbre d'entraînement de trépan tournant dans le carter, portant, sur son extrémité inférieure dépassant hors du carter, un trépan de forage rotatif,
plusieurs dispositifs de serrage électriques disposés dans le carter pour la production de forces de dressage avec des composantes orientables radialement pour l'orientation de l'outil de forage lors du forage et
un dispositif de commande pour le contrôle des dispositifs de serrage
les dispositifs de serrage comprenant des dispositifs de réglage auxquels sont couplées des pièces de serrage (7) en forme de plaques, mobiles radialement vers l'extérieur et vers l'intérieur, pouvant être insérées dans des rainure du carter, réparties sur la circonférence et disposées dans le carter au moins sur un plan de serrage,
dont la mobilité est contrôlée par la température au moyen des au moins un dispositifs de réglage comprenant un fluide sous pression pouvant être dilaté par la chaleur,
**caractérisé en ce que**
le fluide sous pression est un liquide ou un gaz,
le liquide présentant un coefficient de dilatation volumique γ à 18 °C de 5,0 à 20,0 x 10⁻⁴K⁻¹,
le gaz présentant un coefficient de dilatation volumique isobare γ à 18 °C de 3,0 à 4,0 x 10⁻⁴K⁻¹.

2. Outil de forage selon la revendication 1, **caractérisé en ce que** les pièces de serrage (7) sont couplées de manière articulée aux dispositifs de réglage, le dispositif de réglage étant conçu comme un dispositif à piston et cylindre (1), un dispositif de chauffage (9) se trouvant dans une chambre (3) et/ou étant disposé au niveau de la chambre du cylindre (5) pour le chauffage du fluide sous pression, le piston (4) étant couplé, avec son extrémité externe, à la pièce de serrage (7), la chambre du cylindre (5) étant remplie avec le liquide ou le gaz en tant que fluide sous pression.

3. Outil de forage selon la revendication 1 ou 2, **caractérisé en ce que** les pièces de serrage (7) sont couplées de manière articulée aux dispositifs de réglage, le dispositif de réglage étant conçu comme un dispositif à piston et cylindre (1), dont la chambre du cylindre (5) est reliée de manière constante grâce au fluide sous pression avec une chambre (3) d'un carter à chambre (2), la chambre du cylindre (5) et la chambre (3) étant remplies avec le liquide ou le gaz en tant que fluide sous pression, un dispositif de chauffage (9) étant disposé sur au moins une partie des parois internes et/ou externes du carter à chambre (2) pour le chauffage de celui-ci et du fluide sous pression, la chambre du cylindre (5) du dispositif à piston et cylindre (1) comprenant un dispositif de chauffage (9) pour le chauffage du fluide sous pression, le piston (4) étant couplé, avec son extrémité externe, à la pièce de serrage (7).

4. Outil de forage selon la revendication 2 ou 3, **caractérisé en ce que** le piston (4) est poussé, suite au chauffage du fluide sous pression, radialement vers l'axe longitudinal central du carter pour l'appui par force de la pièce de serrage (7) contre une paroi du puits de forage lors du passage de la position initiale à la position finale.

5. Outil de forage selon l'une des revendications 2 à 4, **caractérisé en ce que** le piston (4) est poussé, suite au refroidissement du fluide sous pression, radialement vers l'axe longitudinal central du carter pour l'appui par force de la pièce de serrage (7) contre celui-ci lors du passage de la position finale à la position initiale.

6. Outil de forage selon l'une des revendications 2 à 5, **caractérisé en ce que** le le dispositif de chauffage (9) peut être contrôlé, par l'intermédiaire de câbles conducteurs avec du courant électrique provenant de batteries et/ou d'un générateur électrique entraîné par une turbine entraînée par un écoulement de fluide de forage, par le dispositif de commande pour le chauffage des fluides sous pression.

7. Outil de forage selon l'une des revendications précédentes, **caractérisé en ce que** le liquide utilisé en tant que fluide sous pression présente un coefficient de dilatation volumique γ à 18 °C de 7,2 à 16,3 x 10⁻⁴K⁻¹ , de préférence de 12 à 15 x 10⁻⁴K⁻¹.

8. Outil de forage selon l'une des revendications précédentes, **caractérisé en ce que** le dispositif de réglage est conçu comme un entraînement linéaire qui comprend au moins une tige constituée de matière solide, à l'extrémité externe de laquelle est couplée la pièce de serrage (7).

9. Outil de forage selon l'une des revendications 2 à 8, **caractérisé en ce que** le dispositif à piston et cylindre (1) est conçu avec un double effet, les faces opposées du piston pouvant sollicitées par des fluides sous pression contrôlés en température.

10. Outil de forage selon au moins l'une des revendications précédentes, **caractérisé en ce que** les données déterminées par les dispositifs d'enregistrement de valeurs de mesure du dispositif de commande, plus particulièrement les données de position, peuvent être transmises à un poste de commande disposé en surface par l'intermédiaire d'un câble disposé dans la colonne de forage, d'une télémétrie et/ou sous la forme de signaux de pression ;
moyennant quoi, en option, l'outil de forage comprend un dispositif permettant de générer des signaux de pression pour la transmission des informations dans un canal de rinçage de la colonne de forage au moyen d'une turbine alimenté par le rinçage entraînant un générateur avec un accumulateur raccordé, le générateur, y compris l'accumulateur, l'embrayage et le palier de l'arbre de la turbine étant disposés dans un carter axial rempli d'huile et formant, par rapport à la colonne de forage, un interstice annulaire cylindrique et, dans l'interstice annulaire, s'étend le rinçage pour l'entraînement de la turbine, au-dessus d'un réservoir d'huile dans le carter, est prévu un piston d'équilibrage de pression alimenté par le rinçage et le joint d'étanchéité prévu à l'extrémité inférieure entre le carter et l'arbre de la turbine est conçu comme un joint d'étanchéité léger, par exemple comme un joint d'étanchéité à lèvres ou céramique ; et
en option, l'outil de forage comprend un dispositif permettant de générer des signaux de pression dans des milieux en écoulement pour la transmission d'informations, plus particulièrement lors de la réalisation de forages dans une mine souterraine ou lors de la construction d'un tunnel, à travers un canal de rinçage du tube de forage, moyennant quoi, dans le canal de rinçage de la colonne de forage, est disposée une roue qui est conçue de manière commutable dans un fonctionnement en tant que générateur et en tant que moteur et peut être utilisée alternativement de manière correspondante.

11. Outil de forage selon la revendication 10, **caractérisé en ce que** les données déterminées par les dispositifs d'enregistrement de valeurs de mesure du dispositif de commande, comme les données de position, peuvent être transmises à un poste de commande disposé en surface sous la forme de signaux de pression, l'outil de forage comprend un dispositif pour la transmission des informations, plus particulièrement lors de la réalisation de forages, au moyen d'impulsions de pression dans un liquide en écoulement, de préférence un liquide de rinçage de forage, avec un dispositif de génération d'informations, un dispositif de transmission connecté au dispositif de génération d'informations pour la génération des impulsions de pression dans le liquide et un dispositif de réception pour la réception et l'analyse des informations transmises par les impulsions de pression dans le poste de commande, le dispositif de transmission comprenant un corps de résistance à l'écoulement élastique dans le flux de liquide et un dispositif de réglage pour la modification de la section d'écoulement de la résistance à l'écoulement en cadence avec les impulsions de pression à générer.

12. Outil de forage selon l'une des revendications 10 à 11, **caractérisé en ce que** les données déterminées par les dispositifs d'enregistrement de valeurs de mesure du dispositif de commande, plus particulièrement les données de position, peuvent être transmises à un poste de commande disposé en surface sous la forme de signaux de pression, le dispositif de commande de l'outil de forage étant connectée à un dispositif de transmission des informations à l'intérieur de la colonne de forage au moyen d'impulsions, comme des ondes acoustiques ; moyennant quoi, aux dispositifs d'enregistrement de valeurs de mesure du dispositif de commande, est branchée un dispositif de transmission permettant de générer les impulsions, le dispositif comprenant un dispositif de réception pour la réception et l'analyse des informations transmises par l'intermédiaire des impulsions, qui sont conçues comme des impulsions, sous la forme d'ondes acoustiques, générées au moyen du dispositif de transmission et qui sont transmises au dispositif de réception.

13. Outil de forage selon l'une des revendications précédentes, **caractérisé en ce qu'**une extrémité supérieure de l'arbre d'entraînement du trépan peut être couplée à une colonne de forage.

14. Outil de forage selon l'une des revendications précédentes, **caractérisé en ce que** la chambre du cylindre (5) est reliée de manière continue grâce à un fluide sous pression par l'intermédiaire d'un canal (6) avec la chambre (3) du carter à chambre (2), dans laquelle le fluide sous pression peut être chauffé et refroidi.

15. Procédé de forage dirigé à tracé contrôlé dans des couches profondes de la terre à l'aide de l'outil de forage pour le fonctionnement permanent pour le creusement de forages dans des formations rocheuses souterraines selon au moins l'une des revendications précédentes, moyennant quoi
les données détectées par les dispositifs d'enregistrements de valeurs de mesure d'un dispositif de commande, plus particulièrement les données de position, sont transmises au dispositif de traitement de valeurs de mesure du dispositif de commande, moyennant quoi
les données sont entrées dans le dispositif de traitement de valeurs de mesure du dispositif de commande, dans un circuit de régulation pour une régulation à variables multiples, dans le dispositif de traitement de valeurs de mesure, les données sont comparées, en tant que variables de régulation, avec des consignes ou des valeurs de consigne enregistrées dans le dispositif de traitement de valeurs de mesure,
dans le cas d'un écart avec les consignes ou les valeurs de consigne, des variables de sortie modifiées sont transmises par le dispositif de commande sous la forme de signaux à un commutateur, plus particulièrement à un commutateur marche/arrêt, pour la sollicitation en température du fluide sous pression ou à un dispositif de régulation pour la sollicitation en température progressive conforme aux directives du fluide sous pression dans les dispositifs de serrage grâce à un apport d'énergie électrique aux dispositifs de chauffage.
